(19) Europäisches Patentamt
European Patent Office
Office européen des brevets

(11) EP 1 160 259 A1

(12) **EUROPEAN PATENT APPLICATION**
published in accordance with Art. 158(3) EPC

(43) Date of publication:
**05.12.2001 Bulletin 2001/49**

(21) Application number: **99972229.1**

(22) Date of filing: **16.11.1999**

(51) Int Cl.[7]: **C08F 8/14**, C09D 11/16

(86) International application number:
**PCT/JP99/06384**

(87) International publication number:
**WO 00/29455 (25.05.2000 Gazette 2000/21)**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.11.1998 JP 32462798**
**30.11.1998 JP 33833398**
**07.12.1998 JP 34629698**

(71) Applicant: **TOYO INK MFG. CO., LTD.**
**Chuo-ku Tokyo 1040-0031 (JP)**

(72) Inventors:
- **YASUIKE, Madoka Toyo Ink Mfg. Co., Ltd.**
**Tokyo 104-0031 (JP)**
- **SATOU, Kouji Toyo Ink Mfg. Co., Ltd.**
**Tokyo 104-0031 (JP)**
- **UTSUGI, Masayoshi Toyo Ink Mfg. Co., Ltd.**
**Tokyo 104-0031 (JP)**
- **YAJIMA, Hisao Toyo Ink Mfg. Co., Ltd.**
**Tokyo 104-0031 (JP)**

(74) Representative: **Koepe, Gerd L., Dipl.-Chem.**
**Koepe, Fiesser & Partner, Patentanwälte,**
**Radeckestrasse 43**
**81245 München (DE)**

(54) **RESIN FOR PRINTING INK AND PRINTING INK**

(57) The invention discloses a resin for a printing ink which comprises an ester-modified hydrocarbon resin, which is ester-modified with a long chain aliphatic alcohol, having a melting point of not lower than 100ºC, wherein the ester-modified hydrocarbon resin has not higher than 100ºC at a clouding temperature as the solubility in a hydrocarbon solvent having an aromatic component of not greater than 3% byweight, comprising a naphthene hydrocarbon and/or a paraffin hydrocarbon and having a boiling point of not lower than 200ºC.

The invention provides the excellent properties in the suitable emulsification property, the misting property, set and the drying property as a printing ink which is prepared using the hydrocarbon solvent.



Printed by Jouve, 75001 PARIS (FR)

## Description

Technical Field

The present invention relates to a resin for a printing ink having superior printability, and a printing ink using thereof. Particularly, a resin for printing ink that is suitable for use to offset lithographic printings such as news printing, sheet-fed printing, heat set web printing and waterless printing, and a printing ink using thereof.

Background Art

There is described in, for example, Shikizai Kyokaishi, vol. 63, page 271 (1990) that a rosin-modified phenolic resin has hitherto been used generally and widely for a resin for lithographic ink. Particularly, today's earth environmental preservation and drive to improve work environments preservation necessitates dearomatization, that is, making aromaless (aroma free) printing ink. But, the solubility of a resin in an aromaless solvent is generally low. However, a rosin-modified phenolic resin has good solubility in an aromaless solvent to the extent that the solubility of a rosin-modified phenolic resin in an aromaless solvent is held to be equal to the solubility level of an aromatic solvent. From this viewpoint, the usefulness of a rosin-modified phenolic resin is high. However, the rosin-modified phenolic resin is generally obtained by reacting a resol obtained by reacting phenols with formaldehyde under a basic catalyst, with rosins and various polyhydric alcohols. Therefore, during this process, unreacted formaldehyde or formaldehyde which is discharged as a gas during the reaction must be treated, and working environments are not necessarily improved. Thus, there is demand for a lithographic ink which does use formaldehyde from the viewpoint of today's environmental hygiene preservation.

On the other hand, in terms of a resin for a lithographic ink which does not use resol, a rosin-modified alkyd resin is already known. However, since such the alkyd resin is inferior in the solubility in a solvent for a lithographic ink, wherein the solvent has not greater than 3% by weight of an aromatic component, a lithographic ink manufactured by using the same has problems that it is inferior in the flow property and the transfer property. In addition, in an alkyd resin which is further modified with drying oil and/or a fatty acid thereof, there is a problem that a melting point is remarkably lowered, and a lithographic ink manufactured by using the same has remarkably inferior drying property, blocking property and misting property. In addition, a rosin-modified alkyd resin generally has an inferior emulsifying property, thus, causing the problem that ink is flown down by emulsification with fountain solution.

Further, as a resin for a lithographic ink which dose not use resol, there is disclosed in JP-A-49-99487 a resin having a softening point of not lower than 100ºC obtained by esterifying a higher monohydric saturated alcohol or a higher monohydric unsaturated alcohol having a carbon number of 6 or more with the acid-modified hydrocarbon resin which is reacted an unsaturated carboxylic acid or an anhydride thereof with a hydrocarbon resin which is obtained by thermally polymerising cyclopentadiene, dicyclopentadiene(PCPD) or the same substituted with alkyl. However, since the alcohol as an esterification component is monohydric, there is the problem that the resin has an insufficient cross-linking structure.

In JP-A-50-109004 and JP-A-53-71191, there is disclosed a process for producing a resin for a printing ink which characterized in that DCPD and a cation-polymerizable monomer are polymerized with Friedel-Crafts catalyst to obtain a resin, to this is an $\alpha$, $\beta$-unsaturated carboxylic acid and, which is further modified with a multihydric alcohol. Ethylene glycol, diethylene glycol, triethylene glycol, propylene glycol, butylene glycol, glycerine, pentaerythritol and the like are used as a multihydric alcohol. However, these multihydric alcohols have the insufficient solubility in a hydrocarbon solvent having a boiling of not lower than 200ºC, having an aromatic component of not greater than 3% by weight and comprising a naphthene hydrocarbon and/or a paraffin hydrocarbon. Therefore, there is a problem that it can not be used as a resin for a printing ink.

In addition, in JP-A-5-339352, there is disclosed a cyclopentadiene-modified alkyd resin obtained by reacting a natural unsaturated fatty acid ester and a cyclopentadiene compound under pressure, ester-exchanging the produced adductive with a polyol having at least three hydroxy groups, which is esterified with an aromatic or aliphatic polycarboxylic acid or an anhydride thereof. However, since this resin has clearly has different components from those of the present invention and, additionally, since a component with plasticity such as soybean oil are linseed oil is introduced in the skeleton of a cyclopentadiene resin, there is a problem in that the structural elasticity of the resin is lowered.

Disclosure of the Invention

Particularly, the present invention relates to a resin composition for a printing ink which can be manufactured without using a phenolic resin derived from formaldehyde and phenols. And the present invention aims to improve the resin manufacturing environment and not to use a phenolic resin with better solubility in a hydrocarbon solvent, wherein the solvent has a boiling point of not lower than 200ºC, has an aromatic component of not greater than 3% by weight,

and comprises a naphthene hydrocarbon and/or a paraffin hyrocarbon solvent, that is aromaless (aroma free). Further, the present invention relates to ester-modified hydrocarbon resins, appropriate for use in offset printing such as news printing, sheet-fed printing, heat-set web printing, and waterless printing.

The present inventors studied hard in order to solve the aforementioned problems and found a resin for printing ink which dose not use formaldehyde which is not preferable in terms of environmental hygiene, and resols manufactured by using formaldehyde. The resin of the present invention is better in the lithographic printability, for example, pigment dispsersibility, emulsifiability, misting property and drying property and which was to have a comparable printability to that of the previous rosin-modified phenolic resin, which resulted in completion of the present invention.

That is, the present invention is a resin for a printing ink which comprises an ester-modified hydrocarbon resin, which is ester-modified with a long chain aliphatic alcohol, having a melting point of not lower than 100ºC, wherein the ester-modified hydrocarbon resin has not higher than 100ºC at a clouding temperature as the solubility in a hydrocarbon solvent having an aromatic component of not greater than 3% by weight, comprising a naphthene hydrocarbon and/or a paraffin hydrocarbon and having a boiling point of not lower than 200ºC.

BEST MODES FOR CARRING OUT THE INVENTION

The present invention will be explained in more detail. The present invention is a resin for a printing ink, which is obtained by an esterification reaction of an acid-modified hydrocarbon resin obtained by modifying a hydrocarbon resin containing as a constituent component a five-membered compound represented by the following general formula (1):

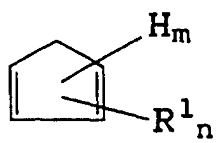

(1)

wherein H represents hydrogen atom, $R^1n$ represents an alkyl group having a carbon number of 1 to 3, and m and n are an integer of 0 to 6, provided that m+n is 6, with an α,β-ethylenically unsaturated carboxylic acid or an anhydride thereof, and a dihydric alcohol (B) represented by the following general formula (2):

$$HO{-}R^2{-}OH \qquad (2)$$

wherein $R^2$ represents an alkylene group having a carbon number of 6 to 20, and/or a trihydric alcohol represented by the following general formula (3):

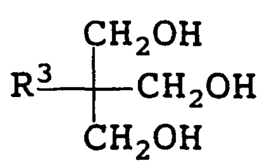

(3)

wherein $R^3$ represents an alkyl group or an alkenyl group having a carbon number of 3 to 25.

Further, the present invention is a process for producing a resin for a printing ink, which comprises reacting an acid-modified hydrogen resin (A), a dihydric alcohol (B), and a trihydric alcohol (C) so that the following relationship is satisfied:

$$(b+c)/a = 0.01 \text{ to } 1$$

wherein

'a' denotes a molar number corresponding to carboxyl group of an α,β-ethylenically unsaturated carboxylic acid or an anhydride thereof contained in the acid-modified hydrocarbon resin (A),
' b' denotes a molar number of hydroxy group of the dihydric alcohol (B), and
'c' denotes a molar number of hydroxy group of the trihydric alcohol (C).

Further, the present invention is a resin for a printing ink, which is obtained by esterification reaction by further using a substituted succinic acid or an anhydride thereof (D) represented by the general formula (4):

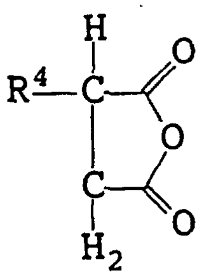

or

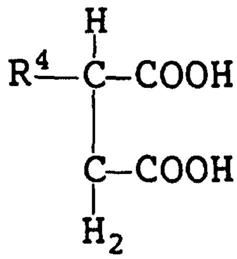

(4)

wherein $R^4$ represents an alkyl group or an alkenyl group having a carbon number of 4 to 30.
Further, the present invention is a process for producing a resin for a printing ink, which comprises reacting an acid-modified hydrocarbon resin (A), substituted succinic acid or an anhydride thereof (D), a dihydric alcohol (B), and a trihydirc alcohol (C) so that the following relationship is satisfied:

$$(b+c)/(d+a) = 0.01 \text{ to } 1$$

wherein

'a' denotes a molar number corresponding to carboxyl group of an α,β-ethylenically unsaturated carboxylic acid or an anhydride thereof contained in the acid-modified hydrocarbon resin (A),
'b' denotes a molar number of hydroxy group of the dihydric alcohol (B), and
'c' denotes a molar number of hydroxy group of the trihydric alcohol (C).
'd' denotes a molar number corresponding to carboxyl group contained in the substituted succinic acid or an anhydride thereof (D),

Further, the present invention is a resin for a printing ink, which is obtained by an esterification reaction by further using at least one selected from the group consisting of a monohydric alcohol (E) represented by the general formula (5):

$$R^5\text{—OH} \qquad (5)$$

wherein $R^5$ represents an alkyl group having a carbon number of 6 to 20 and having a saturated or an unsaturated double bond in the molucule, a saturated or an unaturated fatty acid (F) and a resin acid (G).
Further, the present invention is a process for producing a resin for a printing ink, which comprises reacting an acid-modified hydrocarbon resin (A), a dihydric alcohol (B), a trihydric alcohol (C), substituted succinic acid or an anhydride thereof (D), a monohydric alcohol (E), a saturated or unsaturated fatty acid (F) and a resin acid (G) so that the following relationship is satisfied:

$$(b+c+e)/(a+d+f+g) = 0.01 \text{ to } 1$$

wherein

'a' denotes a molar number corresponding to carboxyl group of an α, β-ethylenically unsaturated carboxylic acid or an anhydrid thereof contained in the acid-modified hydrocarbon resin (A),

'b' denotes a molar number of hydroxy group of the dihydric alcohol (B),
'c' denotes a molar number of hydroxy group of the trihydric alcohol (C),
'd' denotes a molar number corresponding to carboxyl group contained in the substituted succinic acid or an anhydride thereof (D),
'e' denotes a molar number of hydroxy group of the monohydric alcohol (E).
'f' denotes a molar number corresponding to carboxyl group of the saturated or unsaturated fatty acid (F), and
'g' denotes a molar number corresponding to carboxyl group of the resin acid (G),

Further, the present invention is a printing ink which comprises the aforementioned resin for a printing ink, and a hydrocarbon solvent, having a boiling point of not lower than 200ºC, comprising a naphthene hydrocarbon and/or a paraffin hydrocarbon and having the content of an aromatic component of not greater than 3% by weight.

Further, the present invention is a printed article which comprises a substrate which is printed with the printing ink.

The present invention will be explained in more further detail.
A hydrocarbon resin containing as a constituent component a five-membered compound represented by the general formula (1):

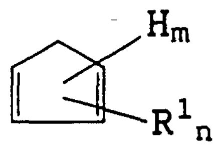

(1)

wherein H represents hydrogen atom, $R^1$n represents an alkyl group having a carbon number of 1 to 3, and m and n are an integer of 0 to 6, provided that m+n is 6, is obtained by thermally polymerizing under the presence of a catalyst or without a catalyst according to the conventional method a cyclopentanediene mononer alone as such as cyclopentenediene, methylcyclopentanediene, dimer to pentamer thereof sucn as dicyclopentadiene, copolymer and the like, or a mixture of a cyclopentane monomer and a comonomer polymerizable therewith. As the catalyst, Friedel-Crafts type Lewis acid catalyst, for example, boron trifluoride and its complex with phenol, ether or acetic acid is usually used. A ratio of a cyclopentenediene monomer and a comonomer polymerizable therewith in the hydrocarbon resin of the present invention is such that a cyclopentadiene monomer is at least 5 mole%.

Examples of the comonomer are olefins having a carbon number of 2 to 10 such as ethylene, propylene, 1-butene, 2-butene, isobutylene, 1-pentene, 2-pentene, diisobutylene obtained by dimerizing isobutylene with an acid catalyst (a mixture of 2,4,4-trimethylpentene-1 and 2,4,4-trimethylpentene), 1-hexene, 2-hexene, 1-octene, 2-octene, 4-octene, 1-decene and the like, linear conjugated dienes such as 1,3-butadiene, 1,3-pentadiene (piperylene), iroprene, 1,3-hexadiene, 2,4-hexadiene and the like, vinyl aromatics such as styrene, α-methylstyrene, β-methylstyrene, isopropnyltoluene, p-tert-butylstyrene, p-hydroxystyrene, vinyltoluene, divinylbenzene and the like, and aromatic unsaturated compounds such as indene, methylindene, chroman (benzofuran), methylchroman (2-methylbenzofuram) and the like.

As such the hydrocarbon resin, there can be exemplified commercially available hydrocarbon resins such as Neoresin EP-110, Neoresin EP-140, Neoresin 540, Neoresin 560 manufactured by Nihonsekiyukagaku (K.K.), Maruka Rez M100A, Maruka Rez M600A, Maruka Rez M890A, Maruka Rez M825A, Maruka Rez 845A, Maruka Rez M905A, Maruka Rez M925A, Maruaka Rez M510A, Maruka Rez M525A, Maruka Rez M545A manufactured by Maruzensekiyukagaku (K.K.), Kleiton 1325, Kleiton 1345 manufactured by Nihonzeon (K.K.), Toho Highresin PA-140 and CORPOREX 2100 manufactured by Tohokagakukogyo (K.K.).

Examples of an α,β-ethylenically unsaturated carboxylic acid and/or an anhydride thereof used for obtaining an acid-modified hydrocarbon resin (A) in the present invention are acrylic acid, methacrylic acid, maleic acid, maleic anhydride, fumaric acid, citraconic acid, citraconic anhydride, itaconic acid, itaconic anhydride, crotonic acid, 2,4-hexadienoic acid (sorbic acid) and the like. An amount of these unsaturated carboxylic acids and/or anhydrides thereof to be modified is 1 to 100 mole% relative to a cyclopntadiene monomer in a hydrocarbon resin used in the present invention. Usually, an amount of 0.01 to 0.5 mole is modified per 100g of the hydrocarbon resin. An optimum modifying amount is desirably adjusted so that these unsaturated carboxylic acids and/or anhyrides thereof do not remain. A modifying temperature is recommended to be not lower than 100ºC and not higher than 300ºC which is a temperature the hydrocarbon resin usually melts but a range of 150ºC to 250ºC is suitably used. These unsaturated carboxylic acids and/or anhyrides thereof can be used alone or a combination of a plurality of them at an arbitrary amount ratio.

An embodiment of a dihydric alcohol (B) represented by the general formula (2):

$$HO-R^2-OH \qquad (2)$$

wherein $R^2$ represents an alkylene group having a carbon number of 6 to 20 will be described in more detail. Preferably, the dihydric alcohol (B) has a boiling point at the normal pressure of not lower than 150ºC, more preferably, not lower than 200ºC from a viewpoint of the reaction. There can be exemplified linear alkylene dihydric alcohols such as 1,6-hexanediol, 1,2-hexanediol, 1,5-hexanediol, 2,5-hexanediol, 1,7-heptanediol, 1,8-octanediol, 1,2-octanediol, 1,9-nonanediol, 1,2-decanediol, 1,10-decanediol, 1,2-decanediol, 1,12-dodecanediol, 1,2-dodecanediol, 1,14-tetradecanediol, 1,2-tetradecanediol, 1,16-hexadecanediol, 1,2-hexadecanediol and the like and, branched alkylene dihydric alcohols such as 2-methyl-2,4-pentanediol, 3-methyl-1,5-pentanediol, 2-methyl-2-propyl-1,3-propanediol, 2,4-dimethyl-2,4-dimethylpentanediol, 2,2-diethyl-1,3-propanediol, 2,2,4-trimethyl-1,3-pentanediol, dimethyloloctane (manufactured by Mitsubishikagaku (K.K.)), 2-ethyl-1,3-hexanediol, 2,5-dimethyl-2,5-hexanediol, 2-methyl-1,8-octanediol, 2-butyl-2-ethyl-1,3-propanediol, 2,4-diethyl-1,5-pentanediol and the like and, cyclic alkylene dihydric alcohols such as 1,2-cyclohexanediol, 1,4-cyclohexanediol, 1,4-cyclohexanedimethanol, 1,2-cycloheptanediol, tricyclodecanedimethanol and the like. These dihydirc alcohols (B) can be used alone or a combination of a plurality of them at an arbitrary amount ratio.

The dihydric alcohol used in the present invention is as described above and, if necessary, glycols such as ethylene glycol, diethylene glycol, triethylene glycol, polyethylene glycol, propylene glycol, dipropylene glycol, tripropylene glycol, polypropylene glycol and the like can be also used. An amount to be used is desirably a range of not greater than 50% by weight relative to the dihydric alcohol (B) in the present invention.

Then, trihydric alcohol used in the present invention represented by the general formula (3):

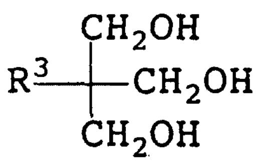

(3)

wherein $R^3$ represents an alkyl group or an alkylene group having a carbon atom of 3 to 25, is obtained according to the known preparing method by reacting a linear and/or branched aliphatic aldehyde having a carbon number of 4 to 26 with an excessive mole amount of (para)formaldehyde under the presence of an alkaline catalyst such as sodium hyroxide, calcium hydroxide and the like. A method for preparing trimethylolalkane and the like from an aliphatic aldehyde and (para)formaldehyde is described in the following known publications, for example. Acta. Chem. Scand., vol, 16, No. 4, pp, 1062 (1962, J. Amer. Oil. Soc., vol. 45, No. 7, pp. 517 (1968), JP-A-59-13749, JP-A-61-148134, JP-A-62-8419, JP-A-2-207053, JP-A-4-89442, JP-A-9-71545, JP-A-9-71546, JP-N-4-55414, JP-B-4-55418, JP-B-2812 and the like.

The particular examples thereof are trimethylol linear alkanes such as 1,1,1-trimethylolbutane, 1,1,1-trimethylolpentane, 1,1,1-trimethylolhexane, 1,1,1-trimethylolheptane, 1,1,1-trimethyloloctane, 1,1,1-trimethylolnonane, 1,1,1-trimethyloldecane, 1,1,1-trimethylolundecane, 1,1,1-trimehyloldodecane, 1,1,1-trimethyloltridecane, 1,1,1-trimethyloltetradecane, 1,1,1-trimethylolpentadecane, 1,1,14-triethylolhexadecane, 1,1,1-trimethylolheptadecane, 1,1,1-trimethyloloctadecane, 1,1,1-trimethylolnanodecane and the like, trimethylol branched alkanes such as 1,1,1-trimethylol-sec-butane, 1,1,1-trimethylol-tert-pentane, 1,1,1-trimethylol-tert-nonane, 1,1,1-trimethylol-tert-tridecane, 1,1,1-trimethylol-tert-heptadecane, 1,1,1-trimethylol-2-methyl-hexane, 1,1,1-trimethylol-3-methyl-hexane, 1,1,1-trimethylol-2-ethyl-hexane, 1,1,1-trimethylol-3-ethyl-hexane, 1,1,1-trimethylol-isoheptadecane and the like, and trimethylol alkenes such as trimethylolbutene, trimethylolheptene, trimethylolpentene, trimethylolhexene, trimethylolheptene, trimethyloloctene, trimethyloldecene, trimethyloldocene, trimethyloltridecene, trimethylolpehtadecene, trimethylolhexadecen, trimethylolheptadecene, trimethylol octadecene and the like. These trihydric alcohols (C) can be used alone or a combination of a plurality of them at an arbitrary amount ratio.

Although these dihydric alcohols (B) and trihydric alcohols (C) can be used at an arbitrary ratio or an arbitrary amount. they are desirably used in a range satisfying the relationship:

$$(b+c)/a = 0.01 \text{ to } 1$$

wherein

'a' represents a molar number corresponding to carboxyl group of an α,β-ethylenically unsaturated carboxylic acid or an anhydride thereof contained in an acid-modified hydrocarbon resin (A),
'b' represents a molar number of hydroxy group of a dihydric alcohol (C), and
'c' represents a molar number of hydroxy group of a trihydric alcohol, respectively.

Substituted succinic acid or an anhydride thereof (D)used in the present invention is represented by the general formula (4) :

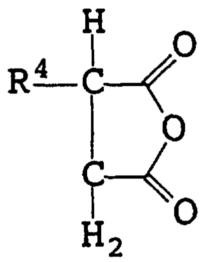

or

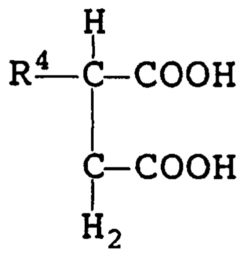

(4)

wherein the $R^4$ represents an alkyl group or an alkenyl group having a carbon atom of 4-30. Examples of substituted succinic acid or an anhydride thereof (D) are linear or branched alkenyl group-substituted succinic acids(anhydrids) such as butenyl suncinic acid(anhydrids), pentenyl succinic acid(anhydrids), hexenyl succinic acid(anhydrids), heptenyl succinic acid(anhydrids), octenyl succinic acid(anhydrids), noneyl succinic acid(anhydrids), decenyl succinic acid(anhydrids), undecenyl succinic acid (anhydrids), dodecenyl succinic acid(anhydrids), tridecenyl succinic acid(anhydrids), tetradecenyl succinic acid(anhydrids), pentadecenyl succinic acid(anhydrids), hexadecenyl succinic acid(anhydrids), heptadecenyl succinic acid(anhydrids), octadecenyl succinic acid(anhydrids), iso-octadecenyl succinic acid(anhydrids), nonadecenyl succinic acid(anhydrids), eicosadecenyl succinic acid(anhydrids), poly(3 to 6) iso-butenyl succinic acid(anhydrids), poly(3 to 8)butenyl succinic acid(anhydrids). poly(3 to 10)propylenyl succinic acid(anhydrids), 1-methyl-2-pentadecenyl succinic acid(anhydrids), 1-ethyl-2-tetradecenyl succinic acid(anhydrids), 1-propyl-2-tridecenyl succinic acid(anhydrids), 1-propyl-2-pentadecenyl succinic acid(anhydrids), 1-hexyl-2-octenyl succinic acid(anhydrids), 1-octyl-2-decenyl succinic acid(anhydrids) and the like, and linear or branched alkyl group-substituted succinic acids(anhydrids)such as butyl succinic acid(anhydrids), pentyl succinic acid(anhydrids), hexyl succinic acid(anhydrids), heptyl succinic acid(anhydrids), octyl succinic acid(anhydrids), nonyl succinic acid(anhydrids), decyl succinic acid(anhydrids), undecyl succinic acid(anhydrids), dodecyl succinic acid(anhydrids), tridecyl succinic acid(anhydrids), tetradecyl succinic acid(anhydrids), pentadecyl succinic acid(anhydrids), hexadecyl succinic acid(anhydrids), heptadecyl succinic acid(anhydrids), octadecyl succinic acid(anhydrids), iso-octadecyl succinic acid(anhydrids), nonadecyl succinic acid(anhydrids), eicosadecyl succinic acid(anhydrids), 1-methyl-2-pentyl succinic acid(anhydrids), 1-ethyl-2-tetradecyl succinic acid(anhydrids), 1-propyl-2-tridecyl succinic acid(anhydrids), 1-propyl-2-pentadecyl succinic acid(anhydrids), 1-hexyl-2-octyl succinic acid(anhydrids), 1-octenyl-2-decyl succinic acid(anhydrids) and the like. These alktl-substituted or alkenyl-substituted succinic acids or anhydrides thereof can be used alone or a combination of a plurality of them at an arbitrary amount ratio.

These alkyl-substituted or alkenyl-substituted succinic acids or anhydrides are obtained by an addition reaction oligomers such as α-olefin, internal olefin or propylene and butene with maleic anhydride or maleic acid described in, for example, JP-A-60-78974, JP-A-64-79163, U.S. Patent No.432841 and the like.

In the present invention, a blending ratio of the acid-modified hydrocarbon resin (A) and the substituted succinic acid or the anhydride thereof (D) is not limited to the specified ones but, essentially, 0.1 to 50 parts by weight of the substituted succinic acid or the anhydride thereof (D) is desirably used relative to 100 parts by weight of the acid-modified hydrocarbon resin (A) and, additionally, it is desirable that the acid-modified hydrocarbon resin (A), the dihydric alcohol (B), an the trihydric alcohol (C), and the substituted succinic acid or the anhydride thereof (D) are used in a range of the conditions satisfying the relationship:

$$(b+c)/(a+d) = 0.01 \text{ to } 1$$

wherein

'a' represents a molar number corresponding to carboxyl group of an α,β-ethylenically unsaturated carboxylic acid

or the anhydride thereof contained in the acid-modified hydrocarbon resin (A),
'b' represents a molar number of hydroxy group of the dihydric alcohol (B),
'c' represents a molar number of hydroxy of the trihydric alcohol (C), and
'd' represents a molar number corresponding to carboxyl group contained in the substituted succinic acid or the anhydride thereof (D), respectively.

A monohydric alcohol (E) used in the present invention represented by the general formula (5):

$$R^5\text{—}OH \qquad (5)$$

wherein $R^5$ represented an alkyl group having a carbon number of 6 to 20 and having a saturated or an unsaturated double bond in the molecule, will be explained. The monohydric alcohol (E) is required to have a boiling point of not lower than 150ºC at the normal pressure, preferably not lower than 200ºC from a viewpoint of the reaction.

As a monohydric alcohol having a saturated alkyl group, there can be exemplified linear alkylalcohols such as 1-hexanol, 2-hexanol, 3-hexanol, 1-heptanol, 2-heptanol, 3-heptanol, 1-octanol, 2-octanol, 3-octanol, 1-nonanol, 2-nonanol, 1-decanol, 2-decanol, 1-undecanol, 1-dodecanol, 2-dodecanol, 1-tridecanol, 1-tetradecanol, 2-tetradecanol, 1-pentadecanol, 1-hexadecanol, 2-hexadecanol, 1-heptadecanol, 1-octadecanol, 1-nonadecanol, 1-eicosanol and the like. In addition, as a monohydric alcohol having a branched saturated alkyl group, there can be exemplified 2-propyl-1-pentanol, 2-ethyl-1-hexanol, 4-methy-3-heptanol, 6-methyl-2-heptanol, 2,4,4-trimethyl-1-pentanol, 3,5,5-trimethyl-1-hexanol, 2,6-domethyl-4-heptanol, iso-nonylalcohol, 3,7-dimethyl-1-octanol, 3,7-dimethyl-3-octanol, 2,4-dimethyl-1-heptanol, 2-heptylundecanol and the like. In addition, there can be used cyclic alcohols such as cyclohexanol, cyclohexanemethamol, cyclopentanemethylol, dicyclohexanemethanol, tricyclodecanemonomethylol, norboneol, hydrogenated rosinalcohol (trade name; Abitol, manufactured by Hercule (K.K.)).

A monohydric alcohol having an unsaturated double bond in the molecule is a monohydric alcohol having an alkene group having one unsaturated double bond in the molecule, an alkadiene group having two unsaturated double bonds, an alkatriene group having three unsaturated double bonds in the molecule and alkapolyne group having four or more unsaturated double bonds in the molecule. There can be exemplified monohydric alcohols having a linear, branched or cyclic unsaturated alkyl group such as oleylalcohol, 11-hexadecene-1-ol, 7-tetradecene-1-ol, 9-tetradecene-1-ol, 11-tetradecene-1-ol, 7-dodecene-1-ol, 10-undecene-1-ol, 9-decene-1-ol, citronellol, 3-nonene-1-ol, 1-octene-3-ol, 1-hexene-3-ol, 2-hexene-1-ol, 3-hexene-1-ol, 4-hexene-1-ol, 5-hexene-1-ol, dodecadiene-1-ol, 2,4-dimethyl-2,6-heptadiene-1-ol, 3,5,5-trimethyl-2-cyclohexene-1-ol, 1,6-heptadiene-4-ol, 3-methyl-2-cyclohexene-1-ol, 2-cyclohexene-1-ol, 1,5-hexadiene-3-ol, phytol, 3-methyl-3-butene-1-ol, 3-methyl-2-butene-1-ol, 4-methyl-3-pentene-1-ol, 3-methyl-1-pentene-3-ol, 6-methyl-5-pentene-2-ol, geraniol, rosinol, linalol, α-terepineol and the like. These monohydric alcohols (E) can be used alone or a combination of a plurality of them at an arbitrary amount ratio.

A saturated or unsaturated fatty acid (F) in the present invention will be explained. As such the saturated or unsaturated fatty acid (F), there can be exemplified compounds having boiling point of not lower than 150ºC at the normal pressure and having a saturated or an unsaturated aliphatic group and a carboxyl group. Preferably, there can be exemplified compounds having a saturated or an unsaturated aliphatic group having a carbon number of 3 to 25. Examples thereof are saturated fatty acids such as butyric acid, valeric acid, caproic acid, enanthic acid, caprylic acid, pelargonic acid, capric acid, undecylic acid, lauric acid, tridecylic acid, myristic acid, pentadecylic acid, palmitic acid, heptadecylic acid, stearic acid, nonadecanoic acid, arachic acid, behenic acid and the like, and unsturated fatty acids such as crotonic acid, isocrotonic acid, lidelic acid, thujic acid, myristreic acid, palmitreic acid, undecereic acid, oleic acid, elaidic acid, gadoleic acid, gondoic acid, cetreic acid, erucic acid, burandic acid, sorbic acid, linoleic acid, linoelaidic acid, linolenic acid, eleostearic acid, arachidonic acid, iwashi acid, nishin acid and the like. These saturated or unsaturated fatty acids (F) can be used alone or a combination -of-a-plurality of them at an arbitrary amount ratio.

The resin acid (G) in the present invention will be explained. As such the resin acid, there can be exemplified gum rosin, wood rosin, torr oil rosin, heterogenous rosin, polymerized rosin and compounds obtained by Diels Alder reaction of them with an α, β-ethylenically unsaturated carboxylic acid or an anhydride thereof, for example, fumaric acid, maleic acid(anhydride), itaconic acid(anhydride), citraconic acid (anhydride)and the like. These resin acid (G) can be used alone or as a combination of a plurality of them at an arbitrary amount ratio.

In the present invention, the monohydric alcohol (E), the saturated or unsaturated fatty acid (F), and the resin acid (G) can be used alone, respectively, or as an any combination thereof. In addition, although they are desirably be appropriately selected and used at an amount, the acid-modified hydrocarbon resin (A), the dihydric alcohol (B), the trihydric alcohol (C), the substituted succinic acid or the anhydride thereof (D), the monohydric alcohol (E), the saturated or the unsaturated fatty acid (F) and the resin acid (G) are desirably used in a range of the conditions satisfying the relationship:

$$(b+c+e)/(a+d+f+g) = 0.01 \text{ to } 1$$

wherein

'a' represents a molar number corresponding to carboxyl group of an α, β-ethylenically unsaturated carboxylic acid or an anhydride thereof contained in the acid-modified hydrocarbon resin (A),
'b' represents a molar number of hydroxy group of the dihydric alcohol (B),
'c' represents a molar number of hydroxy group of the trihydric alcohol (C),
'd' represents a molar number corresponding to carboxyl group contained in the substituted succinic acid or the anhydride thereof (D),
'e' represents a molar number of the monohydric alcohol (E),
'f' represents a molar number corresponding to carboxyl group of the saturated or the unsaturated fatty acid (F), and
'g' represents a molar number corresponding to carboxyl group of the resin acid (G), respectively.

An esterification reaction of the acid-modified hydrocarbon resin (A), the dihydric alcohol (B), the trihydric alcohol (C), the substituted succinic acid or the anhydride thereof (D), the monohydric alcohol (E), the saturated or the unsaturated fatty acid (F) and the resin acid (G) is usually performed at a range of 150ºC to 300ºC, the reaction temperature is required to be determined taking into consideration a boiling point and the reactivity of the compounds used.

In addition, in these reactions, a catalyst can be used as necessary. As the catalyst, there can be exemplified organic sulfonic acids such as benzenesulfonic acid, p-toluenesulfonic acid, p-dodecylbenzenesulfonic acid, methanesulfonic acid, ethanesulfonic acid and the like, mineral acids such as sulfuric acid, hydroxhloric acid and the like, trifluoromethylsulfuric acid, trifluoromethylacetic acid and the like. Further, metal complexes such as tetrabutyl zirconate, tetraisobutyl titanate and the like, and metal salt catalysts such as magnesium oxide, magnesium hydroxide, magnesium acetate, calcium oxide, calcium hydroxide, calcium acetate, zinc oxide, zinc acetate and the like can be also used. These catalysts are usually used at a range of 0.01 to 5% by weight in the total resin. In order to inhibit the coloration of the resin due to the use of catalysts, hypophosphorous acid, triphenylphosphite, triphenylphosphate, triphenylphosphine and the like can be used together.

The ester-modified resin in the present invention can be prepared by placing components selected from the acid-modified hydrocarbon resin (A), the dihydric alcohol (B), the trihydric alcohol (C), the substituted succinic acid or the anhydride thereof (D), the monohydric alcohol (E), the saturated or the unsaturated fatty acid (F) and the resin acid (G) therein at the same time, and initiate to thermally react, or the reaction can be performed by any placing order. In addition, after an adduct is prepared in advance by reacting the dihydric alcohol (B) or the trihydric alcohol (C) and the saturated or the unsaturated fattty acid (F) or the resin acid (G), the adduct and the acid-modified hydrocarbon resin (A) or other components can be reacted.

A weight average molecular weight of a resin for a printing ink of the present invention is 10000 to 300000, preferably 20000 to 150000.

A hydrocarbon solvent having an aromatic component of not greater than 3% by weight, comprising a naphthene hydrocarbon and (or) a paraffin hydrocarbon and having a boiling point of not lower than 200ºC is a solvent called an aromaless (free) solvent and there can be commercially exemplified AF Solvent 4 to 8, No. O Solvent and the like manufactured by Nihonsekiyu (K.K.), Supersol LA35, LA38 and the like manufactured by Idemitsukosan (K. K.), Exxol D80, D110, D120, D-130, D160, D100K, D120K, D-130K and the like manufactured by Exxonkagaku (K.K.), D-SOL280, D-SOL300 and the like manufactured by Rijukagaku Company, MagieSol-40, 44, 47, 52, 60 and the like manufactured by Magie Brothers but being not limiting. Upon the actual use, these can be used in admixture at an arbitrary weight ratio. Further explaining the hydrocarbon solvent in more detail, the particularly preferable solvents upon the use of the hydrocarbon solvent as a printing ink are solvents having an aniline point of a range of 60ºC to 110ºC. If an aniline point is higher than 110ºC, they are poor in the solubility in the present hydrocarbon resin and, as a result, the flowability of a printing ink becomes insufficient, the ink transfer on a printing machine is inferior which leads to the transfer defects, and the leveling on a substrate after printing becomes insufficient which leads to the gloss defects. On the other hand, when an aniline point lower than 60ºC, the release of a solvent from an ink film after printing becomes worse, which gives rise to the drying defects and becomes a cause for blocking, offset and the like.

In addition, a clouding temperature defined in the present invention means a clouding temperature obtained by placing 2 g of a resin and 18 g of the aforementioned hydrocarbon solvent in a tube, and measuring with a fully-automatic clouding temperature measuring apparatus Chemotoronic manufactured by Novocontrol Company, that is, a temperature at which the resin is dissolved in the hydrocarbon solvent at 200ºC and, thereafter, the solution is gradually cooled and the resin is precipitated. The usefulness of the measuring method is reported in American Ink Maker, No. October, pp. 28 (1997).

Then, the use form as a printing ink in the present invention will be explained. A printing ink in the present invention is used usually in the form as a lithographic printing ink.

An ink of the present invention is used in the composition:

| | |
|---|---|
| Pigment | 10 to 30% by weight, |
| Resin | 10 to 40% by weight |
| Hydrocarbon solvent | 10 to 60% by weight |
| Drying oil | 0 to 30% by weight |
| Drying accelerator | 0 to 3% by weight |
| Additives | 0 to 10% by weight. |

In addition, an ester-modified hydrocarbon resin is used as a varnish prepared by dissolving in a hydrocarbon solvent (and a drying oil). A lithographic ink is prepared by using printing ink components such as a pigment, a varnish and/or a gel varnish thereof, a hydro carbon solvent, a drying oil, a drying accelerator, and other additives with a kneading, mixing or adjusting machine such as a kneader, a three-roll mill, an attritor, a sand mill, or a gate mill.

As a pigment, there can be shown an inorganic pigment and an organic pigment. As the inorganic pigment, there can be used chrome yellow, zinc yellow, Prussian blue, barium sulfate, cadmium red, titanium oxide, zinc white, red ion oxide, alumina white, calcium carbonate, ultramarine, carbon black, graphite, aluminum powder, red ion oxide and the like. As the organic pigment, there can be used the various pigments which are known and have been used such as soluble azo pigments such as β-naphthol, β-oxynaphtoic acid, β-oxynaphtoic aicd anilide, acetoacetic acid allylide and pyrazolone, insoluble azo pigments such as β-naphthol, β-oxynaphthoic acid anilide, acetoacetic acid anilide monoazo, acetoacetic acid anilide bisazo and pyrazolone, phthalocyanine pigments such as copper phthalocyanine blue, halogenated (chlorinated or brominate) copper phthalocyanine blue, sulfonated copper phthalocyanine blue and metal free phthalocyanine, and polycyclic and heterocyclic pigments such as quinacridone, dioxazine, threne (pyranthrene, anthoanthrene, indanthrene, anthrapyrimidine, flavanthrene, thioindigo, anthraquinone, perynone, perylene and the like), isoindolinone, metal complexs, quinophthalone and the like.

Then, a drying oil means ester compounds having an iodine value of not less than 130 and having at least one carbon-carbon double bond, and there can be exemplified synthetic fatty oils or natural fatty oils which are an esterification compound of an unsaturated acid having a carbon number of 3 to 25 and having at least one double bond (for example, acrylic acid, butenic acid, hexenic acid, ontenic acid, docenic acid, ricinolic acid, oleic acid, linoleic acid, linolenic acid, eleostearc acid) and a multihydric alcohol having at least two hydroxyl groups (for example, alkyldiols such as hexanediol, glycols such as ethylene glycol and propylene glycol, glycerine, trimethylolpropane, pentaerythritol and dipentaerythritol) and further an unsaturated acid. As such the fatty oil, there are representative compounds such as Chinese tung oil, linseed oil, soybean oil, safflower oil, tung oil, oiticica oil and the like. In addition, there can be exemplified synthetic drying oils such as linseed oil stand oil which is obtained by polymerizing linseed oil, dehydrated castor oil obtained by dehydrating castor oil, maleinated oil obtained by modifying an fatty oil (for example, tung oil) with maleic acid anhydride, styrenated oil (or vinyltoluenated oil) obtained by copolymerizing the aforementioned drying oil with styrene (or vinyltoluene) and the like. In addition, there can be used semi drying oil having an iodine value of 90 to 130 and a polymer thereof such as cottonseed oil, soybean oil, sesame oil, rapeseed oil and the like.

As the drying promotoer, there can be used compounds which are known and have been used a metal salt such as calcium, cobalt, lead, iron, manganese, zinc and zirconium salt of an organic carboxylic acid such as acetic acid, propionic acid, isopentanoic acid, hexanoic acid, 2-ethylacetic acid, naphthenic acid, octylic acid, nonaonic acid, decanoic acid, 2-ethylhexanoic acid, isooctanoic acid, isononaoic acid, lauric acid, palmitic acid, stearic acid, oleic acid, linoleic acid, neodecanoic acid, versatic acid, secanoic acid, toll oil fatty acid, linseed oil fatty acid, soybean oil fatty acid, dimethylhexanoic acid, 3,5,5-trimethylhexanoic acid and dimethyloctanoic acid. In order to accelerates to harden the surface and the interior of a printing ink film, these can be appropriately used as a combination of a plurality of them.

In addition, there can be used a metal complex formed from 1,10-phenanthroline, a multihydric metal and carboxylic acid, for example, compounds described in Example 1 to Example 6 described in JP-A-4334393 such as manganese/acetic acid/1,10-phenanthroline composite complex obtained by a reaction of manganese acetate and 1,10-phenanthroline, manganese/acetic acid/1,10-phenanthroline composite complex obtained by a reaction of manganese octylate and 1,10-phenanthroline, manganese/napththnoic acid/1,10-phenanthroline composite complex obtained by a reaction of naphthnoic acid and 1,10-phenanthroline, manganese/toll oil acid/1,10-phenanthroline obtained by as reaction of toll oil manganese and 1,10-phenenthroline, iron/naphthnoic acid/1,10-phenanthroline composite complex obtained by a reaction of iron naphthnate and 1,10-phenanthroline, and cobalt/neodecanoic acid/1,10-phenanthroline described in the same publication. Further, these dryers can also be used by encapsulating them with an insoluble material of a solvent used in the present invention.

Further, other additives can be used in the printing ink as necessary. For example, as an anti-friction agent, a blocking agent, a slipping agent or a anti-scuffing agent, there are natural wax such as carnauba wax, Japan tallow, lanolin; montane wax, paraffin wax and microcrystalline wax, and synthetic wax such as Fischer-Tropsch wax, polyethylene wax, polypropylene wax, polytetrafluoroethylene wax, polyamide wax and a silicone compound. In addition, as an anti-skinning agent, there are phenols such as cresol, guaiacol and o-isopropylphenol, and oximes such as butyraldoxime, methyl ethyl ketoxime and cyclohexanoneoxime.

Then, a varnish and a gel varnish are explained. In order to obtain a varnish by using an ester-modified hydrocarbon resin of the present invention, 20 to 60 parts by weight of a resin, 0 to 40 parts by weight of a drying oil, 20 to 70 parts by weight of a hydrocarbon solvent are dissolved at a range of 160 to 270ºC under a stream of nitrogen. A ratio of respective components is adjusted by the viscosity and is usually adjusted to use so that the viscosity becomes in a range of 20 to 150 Pa·s/25ºC. In addition, in order to raise the elastisity of the varnish, a varnish having the enhanced degree of cross-linking of a resin can be used by adding a gelling agent. As such the gelling agent, a metal complex is generally used and examples of the representative compounds are aluminum metal complexes are used. As such as the aluminum complex compounds, there can be exemplified cyclic aluminum compounds, for example, cyclic aluminum oxide octate (Kawaken Fine Chemicals: Algomer 800A), cyclic aluminum oxide stearate (Kawaken Fine Chemicals; Algomer 1000S), aluminum aleoholates, for example, aluminum ethylate, aluminum isopropiolate (Kawaken Fine Chemicals: AIPD), aluminum-sec-butylate (Kawaken Fine Chemicals: ASPD), aluminum isopropiolate-mono-sec-butylate (Kawaken Fine Chemicals: AMD) and the like, aluminum alkyl acetates, for example,

aluminum-butoxide-ethylacetoacetate (Hopeseiyaku: Chelope-Al-EB2), aluminum-di-n-butoxide-methylacetoacetate (Hopeseiyaku: Chelope-Al-MB2),
aluminum-di-iso-butoxide-methylacetoacetate (Hopeseiyaku: Chelope-Al-MB12),
aluminum-di-iso-butoxide-ethylacetoacetate (Hopeseiyaku: Chelope-Al-EB102),
aluminum-di-iso-propoxide-ethylacetoacetate (Hopeseiyaku: Chelope-Al-EP12, Kawaken Fine Chemicals: ALCH),
aluminum-tris(ethylacetoacetate) (Kawaken Fine Chemicals: ALCH-TR), aluminum-tris(acetylacetonate) (Kawaken Fine Chemicals: Alumixylate-A),
aluminum-bis(ethylacetoacetate)-monoacetylacetonate (Kawaken Fine Chemicals: Alumixylate D) and the like, aluminum soaps, for example, aluminum stearate (manufactured by Nihonyushi (K.K.)), aluminum oleate, aluminum naphthenate,
aluminum laurate and the like, and aluminum acetylacetonate and the like. These gelling agents are usually used a range of 0.1% by weight to 10% by weight relative to 100% parts by weight of the varnish.

As the other gelling agent, there can be appropriately used cyclic dipeptides having the nature of gelling a fat and oil, for example, cyclic dipeptides described in JP-A-7-247273, JP-A-7-247474 and JP-A-7-247475, bisamides having the nature of gelling an organic liquid, for example, bisamides such-as ethylenebis(12-hydroxyoctadecane acid) amide described in JP-A-5-320617, powdery aluminum-magnesium compound having the layered structure described in JP-A-1-164432, for example,

Al-Mg-hydroxycaprylate, Al-Mg-hydroxymirystate,
Al-Mg-hydroxypalmitate, Al-Mg-hydroxystearate,
Al-Mg-hydroxybehenate and the like.

Further, the hydrocarbon resin in the present invention can be used as a letterpress, gravure, or flexographic ink by dissolving in an apliphatic and/or alicyclic hydrocarbon solvent having a boiling point of not higher than 140ºC to the suitable viscosity.

Examples

The present invention will be explained by means of embodiments.
"Part" in Examples means part by weight.

A: Preparation of ester-modified hydrocarbon resin

Example 1

470 parts of a dicyclopentadiene resin (Marnka Rez 510A: cycyopentadiene/pentadiene=4/1 weight ratio) manufactured by Maruzen Sekiyukagaku (K.K.) and 30 parts of maleic anhydride were placed in a flask equipped with

a stirrer, a refluxing condenser and a thermometer, heated to raise a temperature while blowing a nitrogen gas, and reacted at 180ºC for 3 hours to obtain maleic anhydride-modified DCPD resin (AD-1). Then, 300 parts of AD-1 and 20 parts of butylethylpropanediol (BEPG) were placed in a flask equipped with a stirrer, a refluxing condenser with the moisture separating apparatus and a thermometer, heated to raise a temperature while blowing a nitrogen gas, and reacted at 250ºC for 3 hours to obtain a hydrocarbon resin (R-1) having an acid value of 10, a clouding temperature of 70ºC (Aromafree Solvent No. 7: AF7 manufactured by Nihonsekiyu (K.K.)), a melting point of 140ºC, and a weight average molecular weight (hereinafter referred to as Mw) of 44000 determined by gel permeation chromatography (hereinafter referred to as GPC).

Example 2

According to the same manner as that in Example 1 except that BEPG was replaced with 1,9-nonanediol (ND), a hydrocarbon resin (R-2) having an acid value of 9, a clouding temperature of 90ºC (AF7), a melting point of 140ºC and Mw of 53000 was obtained.

Example 3

According to the same manner as that in Example 1 except that 20 parts of BEPG was replaced with 25 parts of 1,12-dodecanediol (DCP), a hydrocarbon resin (R-3) having an acid value of 12, a clouding temperature of 80ºC (AF7), a melting point of 130ºC and Mw of 37000 was obtained.

Example 4

According to the same manner as that in Example 1 except that BEPG was replaced with 2,4-diethyl-1,5-pentanediol (PD9), a hydrocarbon resin (R-4) having an acid value of 9, a clouding temperature of 80ºC (AF7), a melting point of 140ºC and Mw of 42000 was obtained.

Example 5

According to the same manner as that in Example 1 except that 20 parts of BEPG was replaced with 18 parts of 3-methyl-1,5-pentanediol (MPD), a hydrocarbon resin (R-5) having an acid value of 9, a clouding temperature of 90ºC (AF7), a melting point of 140ºC and Mw of 55000 was obtained.

Example 6

According to the same manner as that in Example 1 except that 20 parts of BEPG was replaced with 22 parts of dimethyloloctane (DMO), a hydrocarbon resin (R-6) having an acid value of 9, a clouding temperature of 70ºC (AF7), a melting point of 130ºC and Mw of 48000 was obtained.

Example 7

According to the same manner as that in Example 1 except that 20 parts of BEPG was replaced with 18 parts of 2-methyl-3-propyl-1,3-propanediol (MPPD), a hydrocarbon resin (R-7) having an acid value of 10, a clouding temperature of 80ºC (AF7), a melting point of 140ºC and Mw of 51000 was obtained. The results of Examples 1 to 7 are summarized in Table 1.

Table 1

| Composition | Material | Example 1 R−1 | Example 2 R−2 | Example 3 R−3 | Example 4 R−4 | Example 5 R−5 | Example 6 R−6 | Example 7 R−7 |
|---|---|---|---|---|---|---|---|---|
| Acid-modified hydrocarbon resin | AD−1 | 300 | 300 | 300 | 300 | 300 | 300 | 300 |
| | AD−2 | | | | | | | |
| | AD−3 | | | | | | | |
| Dihydric alcohol | BEPG | 20 | | | | | | |
| | ND | | 20 | | | | | |
| | DCD | | | 25 | | | | |
| | PD9 | | | | 20 | | | |
| | MPD | | | | | 18 | | |
| | DMO | | | | | | 22 | |
| | MPPD | | | | | | | 18 |
| Resin properties | Unit | | | | | | | |
| Acid value | KOH/mg | 10 | 9 | 12 | 9 | 9 | 9 | 10 |
| Clouding temperature (AF7) | °C | 70 | 90 | 80 | 80 | 90 | 70 | 80 |
| Melting point | °C | 140 | 140 | 130 | 140 | 140 | 130 | 140 |
| Mw | | 44000 | 53000 | 37000 | 42000 | 55000 | 48000 | 51000 |

Example 8

475 parts of Marnka Rez M510A and 25 parts of maleic anhydride were placed in a flask equipped with a stirrer, a refluxing condenser and a thermometer, heated to raise a temperature while blowing a nitrogen gas, and reacted at 180ºC for 3 hours to obtain a maleic anhydride-modified DCPD resin (AD-2). Then, 300 parts of AD-2 and 16 parts of 1,1,1-trimethyloloctane (TMO) were placed in a flask equipped with a stirrer, a refluxing condenser with a water separating apparatus and a thermometer, heated to raise a temperature while blowing a nitrogen gas, and heated at 250ºC for 5 hours to obtain a resin (R-6) having an acid value of 8, a clouding temperature of 95ºC (Aromafree Solvent No.8: AF8 manufactured by Nihonsekiyu (K.K.)), a melting point of 155ºC and Mw of 31000 was obtained.

Example 9

According to the same manner as that in Example 8 except that 16 parts of TMO was replaced with 18.5 parts of 1,1,1-trimethyloldecane (TMD), a resin (R-9) having an acid value of 9, a clouding temperature of 90ºC (AF8), a melting point of 145ºC and Mw of 28000 was obtained.

Example 10

According to the same manner as that in Example 8 except that 16 parts of TMO was replaced with 23 parts of 1,1,1-trimethyloltetradecane (TMTD), a resin (R-10) having an acid value of 10, a clouding temperature of 85ºC (AF8), a melting point of 135ºC and Mw of 25000 was obtained.

Example 11

300 parts of AD-1, 14 parts of TMO and 3 parts of BEPG were placed in a flask equipped with a stirrer, a refluxing condenser with a water separating apparatus and a thermometer, heated to raise a temperature while blowing a nitrogen gas, and reacted at 250ºC for 4 hours to obtain a resin (R-11) having an acid value of 10, a clouding temperature of 75ºC (AF8), a melting point of 150ºC and Mw of 46000 was obtained.

Example 12

According to the same manner as that in Example 11 except that 3 parts of BEPG was replaced with 3 parts of PD-9, a resin (R-12) having an acid value of 9, a clouding temperature of 80ºC (AF8), a melting point of 150ºC and Mw of 58000 was obtained.

Example 13

According to the same manner as that in Example 11 except that 3 parts of BEPG was replaced with 3 parts of DMO, a resin (R-13) having an acid value of 9, a clouding temperature of 65ºC (AF8), a melting point of 145ºC and Mw of 48000 was obtained.

Example 14

300 parts of AD-1, 10 parts of TMO and 6 parts of TMD and 3 parts of ND were placed in a flask equipped with a stirrer, a refluxing condenser with a water separating apparatus and a thermometer, heated to raise a temperature while blowing a nitrogen gas, and reacted at 250ºC for 3 hours to obtain a resin (R-14) having an acid value of 10, a clouding temperature of 80ºC (AF8), a melting point of 135ºC and Mw of 52000 was obtained.

The results of Examples 8 to 14 were summarized in Table 2.

Table 2

| Composition | Material | Example 8 R−8 | Example 9 R−9 | Example 10 R−10 | Example 11 R−11 | Example 12 R−12 | Example 13 R−13 | Example 14 R−14 |
|---|---|---|---|---|---|---|---|---|
| Acid-modified hydrocarbon resin | AD−1 | | | | 300 | 300 | 300 | 300 |
| | AD−2 | 300 | 300 | 300 | | | | |
| Trihydric alcohol | TMO | 16 | | | 14 | 14 | 14 | 10 |
| | TMD | | 18.5 | | | | | 6 |
| | TMTD | | | 23 | | | | |
| Dihydric alcohol | BEPG | | | | 3 | | | |
| | PD−9 | | | | | 3 | | |
| | DMO | | | | | | 3 | |
| | ND | | | | | | | 3 |
| Resin properties | Unit | | | | | | | |
| Acid value | KOH/mg | 8 | 9 | 10 | 10 | 9 | 9 | 10 |
| Clouding temperature (AF8) | °C | 95 | 90 | 85 | 75 | 80 | 65 | 80 |
| Melting point | °C | 155 | 145 | 135 | 150 | 150 | 145 | 135 |
| Mw | | 31000 | 28000 | 25000 | 46000 | 58000 | 48000 | 52000 |

Example 15

460 parts of Marnka Rez M510A and 40 parts of maleic anhydride were placed in a flask equipped with a stirrer, a refluxing condenser and a thermometer, heated to raise a temperature while blowing a nitrogen gas, and reacted at 180ºC for 3 hours to obtain a maleic anhydride-modified DCPD resin (AD-3). Then, 300 parts of AD-3, 28 parts of BEPG and 13 parts of 1-tridecanole were placed in a flask equipped with a stirrer, a refluxing condenser with a water separating apparatus and a thermometer, heated to raise a temperature while blowing a nitrogen gas, and heated at 250ºC for 5 hours to obtain a resin (R-15) having an acid value of 11, a clouding temperature of 70ºC (Aromafree Solvent No.7: AF7 manufactured by Nihonsekiyu (K.K.)), a melting point of 110ºC and a Mw of 38000 was obtained.

Example 16

According to the same manner as that in Example 15 except that 13 parts of D-13 was replaced with 11 parts of 3,7-dimetyl-1-octanole, a resin (R-16) having an acid value of 10, a clouding temperature of 70ºC (AF7), a melting point of 115ºC and Mw of 42000 was obtained.

Example 17

According to the same manner as that in Example 15 except that 28 parts of BEPG was replaced with 28 parts of ND, a resin (R-17) having an acid value of 9, a clouding temperature of 80ºC (AF7), a melting point of 110ºC and Mw of 56000 was obtained.

Example 18

According to the same manner as that in Example 16 except that 28 parts of BEPG was replaced with 28 parts of ND, a hydrocarbon resin (R-18) having an acid value of 10, a clouding temperature of 90ºC (AF7), a melting point of 115ºC and Mw of 32000 was obtained.

Example 19

460 parts of a dicyclopentanediene resin (Marnka Rez M905A: dicyclopentadiene/indene/styrene copolymer) manufactured by Maruzen Sekiyukagaku (K.K.)) and 37 parts of maleic anhydride were placed in a flask equipped with a stirrer, a refluxing condenser and a thermometer, heated to raise a temperature while blowing a nitrogen gas, and reacted at 180ºC for 5 hours to obtain a maleic anhydride-modified DCPD resin (AD-4). Then, 300 parts of AD-4, 28 parts of BEPG and 13 parts of D-13 were placed in a flask equipped with stirrer, a refluxing condenser with a water separating apparatus and a thermometer, heated to raise a temperature while blowing a nitrogen gas, and reacted at 250ºC for 5 hours to obtain a hydrocarbon resin (R-19) having an acid value of 10, a clouding temperature of 95ºC (AF7), a melting point of 130ºC and Mw of 52000.

Example 20

According to the same manner as that in Example 15 except that 13 parts of D-13 was replaced with 10 parts of oleyl alcohol (OA), a resin (R-20) having an acid value of 11, a clouding temperature of 85ºC (AF7), a melting point of 125ºC and Mw of 68000 was obtained.

Example 21

According to the same manner as that in Example 15 except that 13 parts of D-13 was replaced with 22 parts of Abitol (manufactured by Hercule Company), a resin (R-21) having an acid value of 12, a clouding temperature of 80ºC (AF7), a melting point of 130ºC and Mw of 71000 was obtained.

Example 22

300 parts of AD-1, 16 parts of TMO and 5 parts of D-13 were placed in a flask equipped with stirrer, a refluxing condenser with a water separating apparatus and a thermometer, heated to raise a temperature while blowing a nitrogen gas, and reacted at 250ºC for 5 hours to obtain a hydrocarbon resin (R-22) having an acid value of 9, a clouding temperature of 60ºC (AF8), a melting point of 125ºC and Mw of 32000.

Example 23

According to the same manner as that in Example 22 except that 5 parts of D-13 was replaced with 6.5 parts of OA, a resin (R-23) having an acid value of 9, a clouding temperature of 55ºC (AF7), a melting point of 120ºC and Mw of 39000 was obtained.

Example 24

According to the same manner as that in Example 22 except that 5 parts of D-13 was replaced with 8 parts of Abitol, a resin (R-24) having an acid value of 10, a clouding temperature of 75ºC (AF8), a melting point of 130ºC and Mw of 35000 was obtained.

The results of Examples 15 to 24 are summarized in Table 3.

Table 3

| Composition | Material | Example 15 R−15 | Example 16 R−16 | Example 17 R−17 | Example 18 R−18 | Example 19 R−19 | Example 20 R−20 | Example 21 R−21 | Example 22 R−22 | Example 23 R−23 | Example 24 R−24 |
|---|---|---|---|---|---|---|---|---|---|---|---|
| Acid-modified hydrocarbon resin | AD−1 | | | | | | | | 300 | 300 | 300 |
| | AD−3 | 300 | 300 | 300 | 300 | | 300 | 300 | | | |
| | AD−4 | | | | | 300 | | | | | |
| Trihydric alcohol | TMO | | | | | | | | 16 | 16 | 16 |
| Dihydric alcohol | BEPG | 28 | 28 | | | 28 | 28 | 28 | | | |
| | ND | | | 28 | 28 | | | | | | |
| | DCD | | | | | | | | | | |
| | PD9 | | | | | | | | | | |
| | MPD | | | | | | | | | | |
| | DMO | | | | | | | | | | |
| | MPPD | | | | | | | | | | |
| Monohydric alcohol | D13 | 13 | | 13 | | 13 | | | 5 | | |
| | DMEO | | 11 | | 11 | | | | | | |
| | OA | | | | | | 10 | | | 6.5 | |
| | Abitol | | | | | | | 22 | | | 8 |
| Resin properties | Unit | | | | | | | | | | |
| Acid value | KOH/mg | 11 | 10 | 9 | 10 | 10 | 11 | 12 | 9 | 9 | 10 |
| Clouding temperature (AF7) | °C | 70 | 70 | 80 | 90 | 95 | 85 | 80 | | | |
| Clouding temperature (AF8) | °C | | | | | | | | 60 | 55 | 75 |
| Melting point | °C | 110 | 115 | 110 | 115 | 130 | 125 | 130 | 125 | 120 | 130 |
| Mw | | 38000 | 42000 | 56000 | 32000 | 52000 | 68000 | 71000 | 32000 | 39000 | 35000 |

Example 25

300 parts of AD-1, 17 parts of TMO and 5 parts of lauric acid were placed in a flask equipped with stirrer, a refluxing condenser with a water separating apparatus and a thermometer, heated to raise a temperature while blowing a nitrogen gas, and reacted at 250ºC for 7 hours to obtain a resin (R-25) having an acid value of 11, a clouding temperature of 65ºC (AF8), a melting point of 125ºC and Mw of 30000.

Example 26

According to the same manner as that in Example 25 except that 5 parts of lauric acid was replaced with 7 parts of linoleic acid, a resin (R-26) having an acid value of 11, a clouding temperature of 60ºC (AF8), a melting point of 120ºC and Mw of 33000 was obtained.

Example 27

According to the same manner as that in Example 25 except that 5 parts of lauric acid was replaced with 7.5 parts of gum rosin, a resin (R-27) having an acid value of 12, a clouding temperature of 70ºC (AF8), a melting point of 140ºC and Mw of 36000 was obtained.

Example 28

According to the same manner as that in Example 27 except that 7.5 parts of gum rosin was replaced with 7.5 parts of polymerized rosin, a resin (R-28) having an acid value of 12, a clouding temperature of 75ºC (AF8), a melting point of 140ºC and Mw of 51000 was obtained.

Example 29

465 parts of Marnka Rez M510 and 35 parts of maleic anhydride were placed in a flask equipped with stirrer, a refluxing condenser and a thermometer, heated to raise a temperature while blowing a nitrogen gas, and reacted at 180ºC for 4 hours to obtain a maleic anhydride-modified DCPD resin (AD-5). Then, 300 parts of AD-5, 16 parts of TMO, 6.5 parts of BEPG and 5 parts of lauric acid were placed in a flask equipped with a stirrer, a refluxing condenser with a water separating apparatus, heated to raise a temperature while blowing a nitrogen gas, and reacted at 250ºC for 7 hours to obtain a resin (R-29) having an acid value of 12, a clouding temperature of 55ºC (AF8), a melting point of 130ºC and Mw of 48000.

Example 30

According to the same manner as that in Example 29 except that 5 parts of lauric acid was replaced with 7 parts of linoleic acid, a resin (R-30) having an acid value of 12, a clouding temperature of 50ºC (AF8), a melting point of 125ºC and Mw of 53000 was obtained.

Example 31

According to the same manner as that in Example 29 except that 5 parts of lauric acid was replaced with 7.6 parts of gum rosin, a resin (R-31) having an acid value of 12, a clouding temperature of 65ºC (AF8), a melting point of 135ºC and Mw of 42000 was obtained.

Example 32

According to the same manner as that in Example 29 except that 5 parts of lauric acid was replaced with 7.2 parts of polymerized rosin, a resin (R-32) having an acid value of 11, a clouding temperature of 75ºC (AF8), a melting point of 140ºC and Mw of 64000 was obtained.

The results of Examples 25 to 32 are summarized in Table 4.

Table 4

| Composition | Material | Example 25 R−25 | Example 26 R−26 | Example 27 R−27 | Example 28 R−28 | Example 29 R−29 | Example 30 R−30 | Example 31 R−31 | Example 32 R−32 |
|---|---|---|---|---|---|---|---|---|---|
| Acid-modified hydrocarbon resin | AD−1 | 300 | 300 | 300 | 300 | | | | |
| | AD−5 | | | | | 300 | 300 | 300 | 300 |
| Trihydric alcohol | TMO | 17 | 17 | 17 | 17 | 16 | 16 | 16 | 16 |
| Dihydric alcohol | BEPG | | | | | 6.5 | 6.5 | 6.5 | 6.5 |
| Saturated fatty acid (unsaturated) | Lauric acid | 5 | | | | 5 | | | |
| | Linoleic acid | | 7 | | | | 7 | | |
| Resin acid | Gumrosin | | | 7.5 | | | | 7.6 | |
| | Polymerized rosin | | | | 7.5 | | | | 7.2 |
| Resin properties | Unit | | | | | | | | |
| Acid value | KOH/mg | 11 | 11 | 12 | 12 | 12 | 12 | 12 | 11 |
| Clouding temperature (AF8) | °C | 65 | 60 | 70 | 75 | 55 | 50 | 65 | 75 |
| Melting point | °C | 125 | 120 | 140 | 140 | 130 | 125 | 135 | 140 |
| Mw | | 30000 | 33000 | 36000 | 51000 | 48000 | 53000 | 42000 | 64000 |

Example 33

300 parts of AD-5, 16 parts of TMO, 5 parts of BEPG and 3.5 parts of D-13 were placed in a flask equipped with stirrer, a refluxing condenser and a thermometer, heated to raise a temperature while blowing a nitrogen gas, and reacted at 250ºC for 6 hours to obtain a resin (R-33) having an acid value of 10, a clouding temperature of 50ºC (AF8), a melting point of 135ºC and Mw of 38000.

Example 34

According to the same manner as that in Example 33 except that 3.5 parts of D-13 was replaced with 4.7 parts of oleyl alcohol, a resin (R-34) having an acid value of 11, a clouding temperature of 45ºC (AF8), a melting point of 130ºC and Mw of 31000 was obtained.

Example 35

According to the same manner as that in Example 33 except that 3.5 parts of D-13 was replaced with 6 parts of Abitol, a resin (R-35) having an acid value of 12, a clouding temperature of 60ºC (AF8), a melting point of 140ºC and Mw of 31000 was obtained.

The results of Examples 33 to 35 are summarized in Table 5.

Table 5

| Composition | Material | Example 33 R-33 | Example 34 R-34 | Example 35 R-35 |
|---|---|---|---|---|
| Acid-modified hydrocarbon resin | AD-5 | 300 | 300 | 300 |
| Trihydric alcohol | TMO | 16 | 16 | 16 |
| Dihydric alcohol | BEPG | 5 | 5 | 5 |
| Monohydric alcohol | D13 | 3.5 | | |
| | Oleyl alcohol | | 4.7 | |
| | Abitol | | | 6 |
| Resin properties | Unit | | | |
| Acid value | KOH/mg | 10 | 11 | 12 |
| Clouding temperature (AF8) | °C | 50 | 45 | 60 |
| Melting point | °C | 135 | 130 | 140 |
| Mw | | 38000 | 31000 | 31000 |

Example 36

300 parts of AD-1, 25 parts of octenylsuccinic acid anhydride (OSA) and 33 parts of BEPG were placed in a flask equipped with stirrer, a refluxing condenser with a water separating apparatus and a thermometer, heated to raise a temperature while blowing a nitrogen gas, and reacted at 250ºC for 3 hours to obtain a resin (R-36) having an acid value of 10, a clouding temperature of 45ºC (AF7), a melting point of 135ºC and Mw of 64000.

Example 37

According to the same manner as that in Example 36 except that BEPG was replaced with ND, a resin (R-37) having an acid value of 9, a clouding temperature of 70ºC (AF7), a melting point of 135ºC and Mw of 88000 was obtained.

Example 38

According to the same manner as that in Example 36 except that 33 parts of BEPG was replaced with 42 parts of DCD, a resin (R-38) having an acid value of 12, a clouding temperature of 60ºC (AF7), a melting point of 125ºC and Mw of 47000 was obtained.

Example 39

According to the same manner as that in Example 36 except that BEPG was replaced with PD9, a resin (R-39) having an acid value of 9, a clouding temperature of 55ºC (AF7), a melting point of 135ºC and Mw of 72000 was obtained.

Example 40

According to the same manner as that in Example 36 except that 33 parts of BEPG was replaced with 24 parts of MPD, a resin (R-40) having an acid value of 9, a clouding temperature of 75ºC (AF7), a melting point of 135ºC and Mw of 58000 was obtained.

Example 41

According to the same manner as that in Example 36 except that BEPG was replaced with DMO, a resin (R-41) having an acid value of 9, a clouding temperature of 50ºC (AF7), a melting point of 120ºC and Mw of 58000 was obtained.

Example 42

According to the same manner as that in Example 36 except that 33 parts of BEPG was replaced with 27 parts of MPPD, a resin (R-42) having an acid value of 10, a clouding temperature of 65ºC (AF7), a melting point of 130ºC and Mw of 61000 was obtained.

The results of Examples 36 to 42 are summarized in Table 6.

Table 6

| Composition | Material | Example 36 R−36 | Example 37 R−37 | Example 38 R−38 | Example 39 R−39 | Example 40 R−40 | Example 41 R−41 | Example 42 R−42 |
|---|---|---|---|---|---|---|---|---|
| Acid-modified hydrocarbon resin | AD−1 | 300 | 300 | 300 | 300 | 300 | 300 | 300 |
| Alkenyl succinic anhydride | OSA | 25 | 25 | 25 | 25 | 25 | 25 | 25 |
| Dihydric alcohol | BEPG | 33 | | | | | | |
| | ND | | 33 | | | | | |
| | DCD | | | 42 | | | | |
| | PD9 | | | | 33 | | | |
| | MPD | | | | | 24 | | |
| | DMO | | | | | | 33 | |
| | MPPD | | | | | | | 27 |
| Resin properties | Unit | | | | | | | |
| Acid value | KOH/mg | 10 | 9 | 12 | 9 | 9 | 9 | 10 |
| Clouding temperature (AF7) | °C | 45 | 70 | 60 | 55 | 75 | 50 | 65 |
| Melting point | °C | 135 | 135 | 125 | 135 | 135 | 120 | 130 |
| Mw | | 64000 | 88000 | 47000 | 72000 | 58000 | 58000 | 61000 |

Example 43

According to the same manner as that in Example 36 except that 25 parts of OSA was replaced with 30 parts of dodecenyl succinic anhydride (DSA), a resin (R-43) having an acid value of 11, a clouding temperature of 40ºC (AF7), a melting point of 130ºC and Mw of 6100 was obtained.

Example 44

According to the same manner as that in Example 36 except that 25 parts of OSA was replaced with 34 parts of pentedecenyl succinic anhydride (PDSA), a resin (R-44) having an acid value of 11, a clouding temperature of 35ºC (AF7), a melting point of 120ºC and Mw of 50000 was obtained.

Example 45

300 parts of AD-3, 25 parts of OSA, 35 parts of BEPG and 13 parts of D-13 were placed in a flask equipped with stirrer, a refluxing condenser with a water separating apparatus and a thermometer, heated to raise a temperature while blowing a nitrogen gas, and reacted at 250ºC for 7 hours to obtain a resin (R-45) having an acid value of 11, a clouding temperature of not higher than 35ºC (AF7), a melting point of 110ºC and Mw of 35000.

Example 46

According to the same manner as that in Example 45 except that 13 parts of D-13 was replaced with 17 parts of oleylalcohol, a resin (R-46) having an acid value of 10, a clouding temperature of not higher than 35ºC (AF7), a melting point of 105ºC and Mw of 38000 was obtained.

Example 47

According to the same manner as that in Example 45 except that 25 parts of OSA was replaced with 30 parts of DSA and 13 parts of D-13 was replaced with 22 parts of Abitol, a resin (R-47) having an acid value of 12, a clouding temperature of not higher than 45 ºC (AF7), a melting point of 115ºC and Mw of 41000 was obtained.

Example 48

According to the same manner as that in Example 45 except that 35 parts of BEPG was replaced with 40 parts of BEPG and 13 parts of D-13 were replaced with 10 parts of lauric acid, a resin (R-48) having an acid value of 11, a clouding temperature of 50ºC (AF7), a melting point of 120ºC and Mw of 45000 was obtained.

Example 49

According to the same manner as that in Example 48 except that 10 parts of lauric acid was replaced with 14 parts of linoleic acid, a resin (R-49) having an acid value of 12, a clouding temperature of 40ºC (AF7), a melting point of 115ºC and Mw of 37000 was obtained.

Example 50

According to the same manner as that in Example 49 except that 25 parts of OSA was replaced with 30 parts of DSA and 14 parts of linoleic acid was replaced with 15 parts of gum rosin; a resin (R-50) having an acid value of 10, a clouding temperature of 45ºC (AF7), a melting point of 130ºC and Mw of 31000 was obtained.

Example 51

According to the same manner as that in Example 50 except that 15 parts of gum rosin was replacedwith 15 parts of polymerized rosin, a resin (R-51) having an acid value of 10, a clouding temperature of 50ºC (AF7), a melting point of 135ºC and Mw of 68000 was obtained.

The results of Examples 43 to 51 are summarized in Table 7.

Table 7

| Composition | Material | Example 43 R−43 | Example 44 R−44 | Example 45 R−45 | Example 46 R−46 | Example 47 R−47 | Example 48 R−48 | Example 49 R−49 | Example 50 R−50 | Example 51 R−51 |
|---|---|---|---|---|---|---|---|---|---|---|
| Acid-modified hydrocarbon resin | AD−1 | 300 | 300 | | | | | | | |
| | AD−3 | | | 300 | 300 | 300 | 300 | 300 | 300 | 300 |
| Alkenyl succinic anhydride | OSA | | | 25 | 25 | | 25 | 25 | | |
| | DSA | 30 | | | | 30 | | | 30 | 30 |
| | PDSA | | 34 | | | | | | | |
| Dihydric alcohol | BEPG | 33 | 33 | 35 | 35 | 35 | 40 | 40 | 40 | 40 |
| Monohydric alcohol | D13 | | | 13 | | | | | | |
| | Oleyl alcohol | | | | 17 | | | | | |
| | Abitol | | | | | 22 | | | | |
| Saturated fatty acid (unsaturated) | Lauric acid | | | | | | 10 | | | |
| | Linoleic acid | | | | | | | 14 | | |
| Resin acid | Gum rosin | | | | | | | | 15 | |
| | Polymerized rosin | | | | | | | | | 15 |
| Resin properties | Unit | | | | | | | | | |
| Acid value | KOH/mg | 11 | 11 | 11 | 10 | 12 | 11 | 12 | 10 | 10 |
| Clouding temperature (AF7) | °C | 40 | <35 | <35 | <35 | 45 | 50 | 40 | 45 | 50 |
| Melting point | °C | 130 | 120 | 110 | 105 | 115 | 120 | 115 | 130 | 135 |
| Mw | | 61000 | 50000 | 35000 | 38000 | 41000 | 45000 | 37000 | 31000 | 68000 |

Example 52

300 parts of AD-5, 25 parts of OSA, and 31 parts of TMO were placed in a flask equipped with stirrer, a refluxing condenser with a water separating apparatus and a thermometer, heated to raise a temperature while blowing a nitrogen gas, and reacted at 250ºC for 3 hours to obtain a resin (R-52) having an acid value of 18, a clouding temperature of 90ºC (AF8), a melting point of 135ºC and Mw of 49000.

Example 53

According to the same manner as that in Example 52 except that 25 parts of OSA was replaced with 30 parts of DSA, a resin (R-53) having an acid value of 19, a clouding temperature of 80ºC (AF8), a melting point of 130ºC and Mw of 43000 was obtained.

Example 54

According to the same manner as that in Example 52 except that 25 parts of OSA was replaced with 33 parts of PDSA, a resin (R-54) having an acid value of 21, a clouding temperature of 70ºC (AF8), a melting point of 125ºC and Mw of 35000 was obtained.

Example 55

300 parts of AD-5, 25 parts of OSA, 26 parts of TMO and 6 parts of BEPG were placed in a flask equipped with stirrer, a refluxing condenser with a water separating apparatus and a thermometer, heated to raise a temperature while blowing a nitrogen gas, and reacted at 250ºC for 3.5 hours to obtain a resin (R-55) having an acid value of 16, a clouding temperature of 80ºC (AF8), a melting point of 135ºC and Mw of 46000.

Example 56

According to the same manner as that in Example 55 except that 25 parts of OSA was replaced with 30 parts of DSA, a resin (R-56) having an acid value of 18, a clouding temperature of 70ºC (AF8), a melting point of 130ºC and Mw of 42000 was obtained.

Example 57

According to the same manner as that in Example 56 except that 6 parts of BEPG was replaced with 6 parts of PD-9, a resin (R-57) having an acid value of 16, a clouding temperature of 85ºC (AF8), a melting point of 135ºC and Mw of 49000 was obtained.

Example 58

According to the same manner as that in Example 56 except that 6 parts of BEPG was replaced with 6 parts of DMO, a resin (R-58) having an acid value of 15, a clouding temperature of 60ºC (AF8). a melting point of 135ºC and Mw of 46000 was obtained.

Example 59

According to the same manner as that in Example 56 except that 6 parts of BEPG was replaced with 6 parts of MOD, a resin (R-59) having an acid value of 16, a clouding temperature of 90ºC (AF8), a melting point of 135ºC and Mw of 61000 was obtained.

The results of Examples 52 to 59 are summarized in Table 8.

Table 8

| Composition | Material | Example 52 R−52 | Example 53 R−53 | Example 54 R−54 | Example 55 R−55 | Example 56 R−56 | Example 57 R−57 | Example 58 R−58 | Example 59 R−59 |
|---|---|---|---|---|---|---|---|---|---|
| Acid-modified hydrocarbon resin | AD−5 | 300 | 300 | 300 | 300 | 300 | 300 | 300 | 300 |
| Alkenyl succinic anhydride | OSA | 25 | | | 25 | | | | |
| | DSA | | 30 | | | 30 | 30 | 30 | 30 |
| | PDSA | | | 33 | | | | | |
| Trihydric alcohol | TMO | 31 | 31 | 31 | 26 | 26 | 26 | 26 | 26 |
| Dihydric alcohol | BEPG | | | | 6 | 6 | | | |
| | PD−9 | | | | | | 6 | | |
| | DMO | | | | | | | 6 | |
| | MOD | | | | | | | | 6 |
| Resin properties | Unit | | | | | | | | |
| Acid value | KOH/mg | 18 | 19 | 21 | 16 | 18 | 16 | 15 | 16 |
| Clouding temperature (AF8) | °C | 90 | 80 | 70 | 80 | 70 | 85 | 60 | 90 |
| Melting point | °C | 135 | 130 | 125 | 135 | 130 | 135 | 135 | 135 |
| Mw | | 49000 | 43000 | 35000 | 46000 | 42000 | 49000 | 46000 | 61000 |

Example 60

300 parts of AD-5, 30 parts of DSA, 31 parts of TMO and 3 parts of D-13 were placed in a flask equipped with stirrer, a refluxing condenser with a water separating apparatus and a thermometer, heated to raise a temperature while blowing a nitrogen gas, and reacted at 250ºC for 7 hours to obtain a resin (R-60) having an acid value of 11, a clouding temperature of 70ºC (AF8), a melting point of 125ºC and Mw of 48000.

Example 61

According to the same manner as that in Example 60 except that 3 parts of D-13 was replaced with 4 parts of oleylalcohol, a resin (R-61) having an acid value of 12, a clouding temperature of 65ºC (AF8), a melting point of 120ºC and Mw of 53000 was obtained.

Example 62

According to the same manner as that in Example 60 except that 3 parts of D-13 was replaced with 6 parts of Abitol, a resin (R-62) having an acid value of 12, a clouding temperature of 75ºC (AF8), a melting point of 130ºC and Mw of 42000 was obtained.

Example 63

300 parts of AD-5, 25 parts of DSA, 30 parts of TMO and 3 parts of lauric acidwere placed in a flask equipped with stirrer, a refluxing condenser with a water separating apparatus and a thermometer, heated to raise a temperature while blowing a nitrogen gas, and reacted at 250ºC for 8 hours to obtain a resin (R-63) having an acid value of 11, a clouding temperature of 70ºC (AF8), a melting point of 130ºC and Mw of 39000.

Example 64

According to the same manner as that in Example 63 except that 3 parts of lauric acid was replaced with 4 parts of linoleic acid, a resin (R-64) having an acid value of 11, a clouding temperature of 65ºC (AF8), a melting point of 125ºC and Mw of 50000 was obtained.

Example 65

According to the same manner as that in Example 63 except that 3 parts of lauric acid was replaced with 4.5 parts of gum rosin, a resin (R-65) having an acid value of 11, a clouding temperature of 75ºC (AF8), a melting point of 135ºC and Mw of 35000 was obtained.

Example 66

According to the same manner as that in Example 63 except that 3 parts of lauric acidwas replaced with 4 parts of polymerized rosin, a resin (R-66) having an acid value of 12, a clouding temperature of 75ºC (AF8), a melting point of 140ºC and Mw of 53000 was obtained.

The results of Examples 60 to 66 are summarized in Table 9.

Table 9

| Composition | Material | Example 60 R−60 | Example 61 R−61 | Example 62 R−62 | Example 63 R−63 | Example 64 R−64 | Example 65 R−65 | Example 66 R−66 |
|---|---|---|---|---|---|---|---|---|
| Acid-modified hydrocarbon resin | AD−5 | 300 | 300 | 300 | 300 | 300 | 300 | 300 |
| Alkenyl succinic anhydride | DSA | 30 | 30 | 30 | 25 | 25 | 25 | 25 |
| Trihydric alcohol | TMO | 31 | 31 | 31 | 30 | 30 | 30 | 30 |
| Monohydric alcohol | D13 | 3 | | | | | | |
| | Oleyl alcohol | | 4 | | | | | |
| | Abitol | | | 5 | | | | |
| Saturated fatty acid (unsaturated) | Lauric acid | | | | 3 | | | |
| | Linoleic acid | | | | | 4 | | |
| Resin acid | Gum.rosin | | | | | | 4.5 | |
| | Polymerized rosin | | | | | | | 4 |
| Resin properties | Unit | | | | | | | |
| Acid value | KOH/mg | 11 | 12 | 12 | 11 | 11 | 11 | 12 |
| Clouding temperature (AF8) | °C | 70 | 65 | 75 | 70 | 65 | 75 | 75 |
| Melting point | °C | 125 | 120 | 130 | 130 | 125 | 135 | 140 |
| Mw | | 48000 | 53000 | 42000 | 39000 | 50000 | 35000 | 53000 |

Example 67

300 parts of AD-5, 30 parts of DSA, 25 parts of TMO and 7 parts of BEPG were placed in a flask equipped with stirrer, a refluxing condenser with a water separating apparatus and a thermometer, heated to raise a temperature while blowing a nitrogen gas, and reacted at 250ºC for 7 hours to obtain a resin (R-67) having an acid value of 11, a clouding temperature of 60ºC (AF8), a melting point of 130ºC and Mw of 43000.

Example 68

According to the same manner as that in Example 67 except that 3 parts of D-13 was replaced with 4 parts of oleylalcohol, a resin (R-68) having an acid value of 11, a clouding temperature of 55ºC (AF8), a melting point of 125ºC and Mw of 48000 was obtained.

Example 69

According to the same manner as that in Example 67 except that 3 parts of D-13 was replaced with 5 parts of Abitol, a resin (R-69) having an acid value of 12, a clouding temperature of 65ºC (AF8), a melting point of 135ºC and Mw of 37000 was obtained.

Example 70

300 parts of AD-5, 25 parts of DSA, 25 parts of TMO and 7 parts of BEPG were placed in a flask equipped with stirrer, a refluxing condenser with a water separating apparatus and a thermometer, heated to raise a temperature while blowing a nitrogen gas, and reacted at 250ºC for 8 hours to obtain a resin (R-70) having an acid value of 11, a clouding temperature of 60ºC (AF8), a melting point of 135ºC and Mw of 31000.

Example 71

According to the same manner as that in Example 70 except that 3 parts of lauric acid was replaced with 4 parts of linoleic acid, a resin (R-71) having an acid value of 12, a clouding temperature of 55ºC (AF8), a melting point of 130ºC and Mw of 48000 was obtained.

Example 72

According to the same manner as that in Example 70 except that 3 parts of lauric acid was replaced with 4.5 parts of gum rosin, a resin (R-72) having an acid value of 10, a clouding temperature of 65ºC (AF8), a melting point of 140ºC and Mw of 36000 was obtained.

Example 73

According to the same manner as that in Example 70 except that 3 parts of lauric acidwas replaced with 4 parts of polymerized rosin, a resin (R-73) having an acid value of 12, a clouding temperature of 65ºC (AF8), a melting point of 145ºC and Mw of 49000 was obtained.

The results of Examples 67 to 73 are summarized in Table 10.

Table 10

| Composition | Material | Example 67 R−67 | Example 68 R−68 | Example 69 R−69 | Example 70 R−70 | Example 71 R−71 | Example 72 R−72 | Example 73 R−73 |
|---|---|---|---|---|---|---|---|---|
| Acid-modified hydrocarbon resin | AD−5 | 300 | 300 | 300 | 300 | 300 | 300 | 300 |
| Alkenyl succinic anhydride | DSA | 30 | 30 | 30 | 25 | 25 | 25 | 25 |
| Trihydric alcohol | TMO | 25 | 25 | 25 | 25 | 25 | 25 | 25 |
| Dihydric alcohol | BEPG | 7 | 7 | 7 | 7 | 7 | 7 | 7 |
| Monohydric alcohol | D13 | 3 | | | | | | |
| | Oleyl alcohol | | 4 | | | | | |
| | Abitol | | | 5 | | | | |
| Saturated fatty acid (unsaturated) | Lauric acid | | | | 3 | | | |
| | Linoleic acid | | | | | 4 | | |
| Resin acid | Gumrosin | | | | | | 4.5 | |
| | Polymerized rosin | | | | | | | 4 |
| Resin properties | Unit | | | | | | | |
| Acid value | KOH/mg | 11 | 11 | 12 | 11 | 12 | 10 | 12 |
| Clouding temperature (AF8) | °C | 60 | 55 | 65 | 60 | 55 | 65 | 65 |
| Melting point | °C | 130 | 125 | 135 | 135 | 130 | 140 | 145 |
| Mw | | 43000 | 48000 | 37000 | 31000 | 48000 | 36000 | 49000 |

B. Preparation of varnish and gel varnish

40 parts of a resin (R-1), 20 parts of linseed oil and 33 parts of AF5 Solvent were placed in a flask equipped with a stirrer, a condenser and a thermometer, and heated to dissolve at 190ºC for 1 hour under a nitrogen stream to obtain a varnish (V-1) having the viscosity (25ºC) of 55 Pa·s. Then, the varnish was cooled to 160ºC. 0.7 part of a gelling agent (ALCH) manufactured by Kawaken Fine Chemicals (K.K.) was placed therein, a temperature was raised to 190ºC again, which was heated to react for 1 hour, 7 parts of AF5 Solvent was added to obtain a gel varnish (GV-1) having the viscosity of 93 Pa·s. Regarding the resins R-2 to R-73 exemplified in Examples 2 to 73, preparation of a varnish and preparation of a gel varnish were performed according to the same manner. A varnish was prepared so that the viscosity of was in a range of 50 to 60 Pa·s. A gel varnish was prepared so that the viscosity was in a range of 90 to 100 Pa·s. The detailed formulations were summarized in Tables 11 to 20.

Table 11

| Composition | | Example 1 GV1 | Example 2 GV2 | Example 3 GV3 | Example 4 GV4 | Example 5 GV5 | Example 6 GV6 | Example 7 GV7 |
|---|---|---|---|---|---|---|---|---|
| Resin | R1 | 40 | | | | | | |
| | R2 | | 38 | | | | | |
| | R3 | | | 39 | | | | |
| | R4 | | | | 38 | | | |
| | R5 | | | | | 37 | | |
| | R6 | | | | | | 40 | |
| | R7 | | | | | | | 39 |
| Hydrocarbon solvent | AF5 | 40 | 40 | 41 | 40 | 38 | 40 | 39 |
| | AF7 | | 2 | | 2 | 5 | | 2 |
| Drying oil | Linseed oil | 20 | 20 | 20 | 17 | 20 | 17 | 20 |
| | Tung oil | | | | | | 3 | |
| | Dehydrated castor oil | | | | | | | |
| | Soybean oil | | | | 3 | | | |
| Gelling agent | ALCH | 0.7 | 0.7 | 0.7 | 0.7 | 0.7 | 0.8 | 0.7 |
| Viscosity | Pa·s /25°C | 93 | 97 | 95 | 96 | 99 | 91 | 97 |

Table 12

| Composition | | Example 8 GV8 | Example 9 GV9 | Example 10 GV10 | Example 11 GV11 | Example 12 GV12 | Example 13 GV13 | Example 14 GV14 |
|---|---|---|---|---|---|---|---|---|
| Resin | R8 | 38 | | | | | | |
| | R9 | | 38 | | | | | |
| | R10 | | | 39 | | | | |
| | R11 | | | | 40 | | | |
| | R12 | | | | | 39 | | |
| | R13 | | | | | | 41 | |
| | R14 | | | | | | | 39 |
| Hydrocarbon solvent | AF5 | 32 | 32 | 31 | 30 | 31 | 24 | 31 |
| | AF6 | | | | | | 5 | |
| | AF8 | 10 | 10 | 10 | 10 | 10 | 10 | 10 |
| Drying oil | Linseed oil | 20 | 20 | 20 | 20 | 20 | 20 | 20 |
| Gelling agent | ALCH | 0.7 | 0.7 | 0.7 | 0.7 | 0.7 | 0.8 | 0.7 |
| Viscosity | Pa·s /25°C | 95 | 96 | 98 | 93 | 94 | 97 | 93 |

Table 13

| Composition | | Example 15 GV15 | Example 16 GV16 | Example 17 GV17 | Example 18 GV18 | Example 19 GV19 | Example 20 GV20 | Example 21 GV21 | Example 22 GV22 | Example 23 GV23 | Example 24 GV24 |
|---|---|---|---|---|---|---|---|---|---|---|---|
| Resin | R15 | 43 | | | | | | | | | |
| | R16 | | 43 | | | | | | | | |
| | R17 | | | 42 | | | | | | | |
| | R18 | | | | 40 | | | | | | |
| | R19 | | | | | 37 | | | | | |
| | R20 | | | | | | 38 | | | | |
| | R21 | | | | | | | 39 | | | |
| | R22 | | | | | | | | 41 | | |
| | R23 | | | | | | | | | 42 | |
| | R24 | | | | | | | | | | 40 |
| Hydrocarbon solvent | AF5 | 37 | 37 | 38 | 38 | 35 | 38 | 39 | 19 | 28 | 30 |
| | AF6 | | | | | | | | 10 | 10 | |
| | AF7 | | | | 2 | 8 | 4 | 2 | | | |
| | AF8 | | | | | | | | 10 | | 10 |
| Drying oil | Linseed oil | 17 | 17 | 20 | 20 | 18 | 20 | 20 | 20 | 20 | 20 |
| | Tung oil | | 3 | | | | | | | | |
| | Dehydrated castor oil | 3 | | | | | | | | | |
| | Soybean oil | | | | | 2 | | | | | |
| Gelling agent | ALCH | 0.9 | 0.9 | 0.8 | 0.7 | 0.7 | 0.7 | 0.7 | 0.8 | 0.8 | 0.7 |
| Viscosity | Pa·s /25°C | 93 | 93 | 94 | 98 | 100 | 94 | 95 | 92 | 93 | 92 |

Table 14

| Composition | | Example 25 GV25 | Example 26 GV26 | Example 27 GV27 | Example 28 GV28 | Example 29 GV29 | Example 30 GV30 | Example 31 GV31 | Example 32 GV32 |
|---|---|---|---|---|---|---|---|---|---|
| Resin | R25 | 41 | | | | | | | |
| | R26 | | 42 | | | | | | |
| | R27 | | | 40 | | | | | |
| | R28 | | | | 40 | | | | |
| | R29 | | | | | 42 | | | |
| | R30 | | | | | | 43 | | |
| | R31 | | | | | | | 41 | |
| | R32 | | | | | | | | 40 |
| Hydrocarbon solvent | AF5 | 24 | 23 | 30 | 30 | 18 | 17 | 19 | 30 |
| | AF6 | 5 | 5 | | | 20 | 20 | 20 | 5 |
| | AF8 | 10 | 10 | 10 | 10 | | | | 5 |
| Drying oil | Linseed oil | 20 | 20 | 20 | 20 | 20 | 20 | 20 | 20 |
| Gelling agent | ALCH | 0.8 | 0.8 | 0.8 | 0.7 | 0.9 | 0.8 | 0.8 | 0.7 |
| Viscosity | Pa·s /25°C | 98 | 95 | 91 | 93 | 99 | 97 | 98 | 96 |

Table 15

| Composition | | Example 33 GV33 | Example 34 GV34 | Example 35 GV35 |
|---|---|---|---|---|
| Resin | R33 | 43 | | |
| | R34 | | 44 | |
| | R35 | | | 42 |
| Hydrocarbon solvent | AF5 | 17 | 16 | 18 |
| | AF6 | 20 | 20 | 20 |
| | AF8 | | | |
| Drying oil | Linseed oil | 20 | 20 | 20 |
| Gelling agent | ALCH | 0.9 | 0.9 | 0.8 |
| Viscosity | Pa·s /25°C | 96 | 99 | 97 |

Table 16

| Composition | | Example 36 GV36 | Example 37 GV37 | Example 38 GV38 | Example 39 GV39 | Example 40 GV40 | Example 41 GV41 | Example 42 GV42 |
|---|---|---|---|---|---|---|---|---|
| Resin | R36 | 40 | | | | | | |
| | R37 | | 39 | | | | | |
| | R38 | | | 39 | | | | |
| | R39 | | | | 40 | | | |
| | R40 | | | | | 38 | | |
| | R41 | | | | | | 40 | |
| | R42 | | | | | | | 38 |
| Hydrocarbon solvent | AF5 | 40 | 39 | 39 | 38 | 37 | 40 | 38 |
| | AF6 | | | | 2 | | 38 | 2 |
| | AF7 | | 2 | 2 | | 5 | | 2 |
| Drying oil | Linseed oil | 20 | 20 | 20 | 17 | 20 | 17 | 17 |
| | Tung oil | | | | | | 3 | |
| | Dehydrated castor oil | | | | | | | 3 |
| | Soybean oil | | | | 3 | | | |
| Gelling agent | ALCH | 0.8 | 0.8 | 0.8 | 0.8 | 0.8 | 0.8 | 0.7 |
| Viscosity | Pa·s /25°C | 91 | 93 | 95 | 93 | 98 | 92 | 90 |

Table 17

| Composition | | Example 43 GV43 | Example 44 GV44 | Example 45 GV45 | Example 46 GV46 | Example 47 GV47 | Example 48 GV48 | Example 49 GV49 | Example 50 GV50 | Example 51 GV51 |
|---|---|---|---|---|---|---|---|---|---|---|
| Resin | R43 | 42 | | | | | | | | |
| | R44 | | 43 | | | | | | | |
| | R45 | | | 44 | | | | | | |
| | R46 | | | | 45 | | | | | |
| | R47 | | | | | 41 | | | | |
| | R48 | | | | | | 40 | | | |
| | R49 | | | | | | | 42 | | |
| | R50 | | | | | | | | 40 | |
| | R51 | | | | | | | | | 40 |
| Hydrocarbon solvent | AF5 | 28 | 22 | 6 | 5 | 19 | 20 | 23 | 20 | 30 |
| | AF6 | 10 | 15 | 30 | 30 | 20 | 10 | 15 | 20 | 8 |
| | AF7 | | | | | | 10 | | | 2 |
| Drying oil | Linseed oil | 20 | 17 | 20 | 20 | 18 | 20 | 18 | 20 | 20 |
| | Table oil | | 3 | | | | | 2 | | |
| | Dehydrated castor oil | | | | | 2 | | | | |
| | Soybean oil | | | | | | | | | |
| Gelling agent | ALCH | 0.9 | 0.9 | 1 | 1.1 | 1 | 0.8 | 0.9 | 0.8 | 0.8 |
| Viscosity | Pa·s /25°C | 93 | 93 | 91 | 92 | 93 | 93 | 95 | 94 | 95 |

Table 18

| Composition | | Example 52 GV52 | Example 53 GV53 | Example 54 GV54 | Example 55 GV55 | Example 56 GV56 | Example 57 GV57 | Example 58 GV58 | Example 59 GV59 |
|---|---|---|---|---|---|---|---|---|---|
| Resin | R52 | 38 | | | | | | | |
| | R53 | | 39 | | | | | | |
| | R54 | | | 40 | | | | | |
| | R55 | | | | 39 | | | | |
| | R56 | | | | | 40 | | | |
| | R57 | | | | | | 39 | | |
| | R58 | | | | | | | 41 | |
| | R59 | | | | | | | | 38 |
| Hydrocarbon solvent | AF5 | 22 | 31 | 30 | 31 | 30 | 31 | 24 | 22 |
| | AF6 | | | | | | | 10 | |
| | AF8 | 20 | 10 | 10 | 10 | 10 | 10 | 5 | 20 |
| Drying oil | Linseed oil | 20 | 20 | 20 | 20 | 20 | 20 | 20 | 20 |
| Gelling agent | ALCH | 0.7 | 0.7 | 0.7 | 0.7 | 0.7 | 0.7 | 0.8 | 0.7 |
| Viscosity | Pa·s /25°C | 97 | 95 | 95 | 98 | 97 | 95 | 97 | 98 |

Table 19

| Composition | | Example 60 GV60 | Example 61 GV61 | Example 62 GV62 | Example 63 GV63 | Example 64 GV64 | Example 65 GV65 | Example 66 GV66 |
|---|---|---|---|---|---|---|---|---|
| Resin | R60 | 40 | | | | | | |
| | R61 | | 40 | | | | | |
| | R62 | | | 40 | | | | |
| | R63 | | | | 40 | | | |
| | R64 | | | | | 40 | | |
| | R65 | | | | | | 40 | |
| | R66 | | | | | | | 40 |
| Hydrocarbon solvent | AF5 | 30 | 30 | 30 | 30 | 30 | 30 | 30 |
| | AF6 | | | | | 5 | | |
| | AF8 | 10 | 10 | 10 | 10 | 5 | 10 | 10 |
| Drying oil | Linseed oil | 20 | 20 | 20 | 20 | 20 | 20 | 20 |
| Gelling agent | ALCH | 0.7 | 0.8 | 0.65 | 0.7 | 0.8 | 0.7 | 0.7 |
| Viscosity | Pa·s /25°C | 93 | 95 | 94 | 95 | 97 | 96 | 98 |

Table 20

| Composition | | Example 67 GV67 | Example 68 GV68 | Example 69 GV69 | Example 70 GV70 | Example 71 GV71 | Example 72 GV72 | Example 73 GV73 |
|---|---|---|---|---|---|---|---|---|
| Resin | R67 | 42 | | | | | | |
| | R68 | | 43 | | | | | |
| | R69 | | | 42 | | | | |
| | R70 | | | | 41 | | | |
| | R71 | | | | | 43 | | |
| | R72 | | | | | | 40 | |
| | R73 | | | | | | | 40 |
| Hydrocarbon solvent | AF5 | 28 | 27 | 28 | 29 | 17 | 20 | 30 |
| | AF6 | 10 | 10 | 10 | 10 | 15 | 10 | |
| | AF8 | | | | | 5 | 10 | 10 |
| Drying oil | Linseed oil | 20 | 20 | 20 | 20 | 20 | 20 | 20 |
| Gelling agent | ALCH | 0.8 | 0.8 | 0.8 | 0.8 | 0.8 | 0.8 | 0.8 |
| Viscosity | Pa·s /25°C | 93 | 94 | 93 | 92 | 98 | 95 | 97 |

C: Preparation of printing ink

60 parts of the gel varnish (GV-1) and 18 parts of Lionol Blue 7330 (pigment manufactured by Toyoink (K.K.)) were dispersed with a three-roll mill, 20 parts of AF5 and 2 parts of GV-1 were added, then 1 part of manganese naphthenate was added to obtain a lithographic ink (I-1) having an tack value of 9.2, a flow of 18.3 and the viscosity of 92 Pa·s(25ºC). This ink was tested to evaluate and found that the emulsification rate was 20%, a flow after emulsification was 18.1, and the viscosity after emulsification was 93 Pa·s and, thus, the results without deterioration of the ink properties due to emulsification were obtained. In addition, the misting was 4 determined by the relative evaluation, being better. According to a printing test, the better results were obtained such that a gloss value was 72, setting time was 18 minutes, and the drying properties on a paper was 4.2 hours. Regarding the resins R-2 to R-73 exemplified in Examples 2 to 73, preparation of an ink was performed according to the same manner. The detailed formulations and the results of the printing test are summarized in Tables 21 to 32.

Table 21

| Composition | | Example 1 1−1 | Example 2 1−2 | Example 3 1−3 | Example 4 1−4 | Example 5 1−5 | Example 6 1−6 | Example 7 1−7 |
|---|---|---|---|---|---|---|---|---|
| Pigment | Lionol Blue 7330 | 18 | 18 | 18 | 18 | 18 | 18 | 18 |
| Gel varnish | GV1 | 62 | | | | | | |
| | GV2 | | 60 | | | | | |
| | GV3 | | | 61 | | | | |
| | GV4 | | | | 60 | | | |
| | GV5 | | | | | 59 | | |
| | GV6 | | | | | | 62 | |
| | GV7 | | | | | | | 61 |
| Hydrocarbon solvent | AF5 | 20 | 20 | 20 | 20 | 20 | 20 | 20 |
| | AF7 | | 2 | 1 | 2 | 3 | | 1 |
| Drying accelerator | Manganese naphthenate | 1 | 1 | 0.5 | 1 | 1 | 1 | 0.5 |
| | Cobalt naphthenate | | | 0.5 | | | | 0.5 |
| Ink properties | Tack | 9.2 | 9.6 | 9.5 | 9.6 | 9.3 | 9.3 | 9.7 |
| | Flow | 18.3 | 18 | 18.5 | 18.2 | 18.1 | 18.2 | 18 |
| | Viscosity (Pa·s/25℃) | 92 | 98 | 96 | 96 | 99 | 96 | 97 |
| | Misting | 4 | 5 | 4 | 4 | 4 | 4 | 4 |
| Emulsificated ink properties | Emulsification rate (%) | 20 | 18 | 20 | 19 | 19 | 20 | 21 |
| | Flow | 18.1 | 17.8 | 18.3 | 18.2 | 17.9 | 18 | 18.4 |
| | Viscosity (Pa·s/25℃) | 93 | 99 | 97 | 96 | 101 | 98 | 92 |
| Printing test | Gloss value | 72 | 70 | 71 | 72 | 70 | 72 | 73 |
| | Set (min.) | 18 | 16 | 14 | 16 | 15 | 11 | 18 |
| | Drying on a paper (hour) | 4.5 | 3.5 | 3.5 | 4 | 3.5 | 3.5 | 4.5 |

Table 22

| Composition | | Example 8 I−8 | Example 9 I−9 | Example 10 I−10 | Example 11 I−11 | Example 12 I−12 | Example 13 I−13 | Example 14 I−14 |
|---|---|---|---|---|---|---|---|---|
| Pigment | Lionol Blue 7330 | 18 | 18 | 18 | 18 | 18 | 18 | 18 |
| Gel varnish | GV8 | 60 | | | | | | |
| | GV9 | | 60 | | | | | |
| | GV10 | | | 60 | | | | |
| | GV11 | | | | 61 | | | |
| | GV12 | | | | | 61 | | |
| | GV13 | | | | | | 62 | |
| | GV14 | | | | | | | 60 |
| Hydrocarbon solvent | AF5 | 20 | 12 | 12 | 21 | 16 | 20 | 12 |
| | AF7 | 2 | 10 | 10 | | 5 | | 5 |
| | AF8 | | | | | | | 5 |
| Drying accelerator | Manganese naphthenate | 1 | 1 | 1 | 0.5 | 1 | 1 | 1 |
| | Cobalt naphthenate | | | | 0.5 | | | |
| Ink properties | Tack | 9.4 | 9.5 | 9.8 | 9.1 | 9.3 | 9.5 | 9.3 |
| | Flow | 18.1 | 18 | 18 | 18.2 | 18.1 | 18.2 | 18.2 |
| | Viscosity (Pa·s/25°C) | 98 | 97 | 98 | 93 | 95 | 94 | 95 |
| | Misting | 5 | 5 | 5 | 4 | 5 | 4 | 5 |
| Emulsificated ink properties | Emulsification rate (%) | 19 | 18 | 18 | 18 | 18 | 19 | 19 |
| | Flow | 17.9 | 17.8 | 17.9 | 18 | 18 | 18 | 18 |
| | Viscosity (Pa·s/25°C) | 98 | 99 | 98 | 95 | 96 | 95 | 96 |
| Printing test | Gloss value | 70 | 70 | 70 | 71 | 71 | 72 | 70 |
| | Set (min.) | 17 | 17 | 15 | 18 | 16 | 14 | 14 |
| | Drying on a paper (hour) | 4 | 4 | 5 | 4.5 | 4 | 5 | 4 |

Table 23

| Composition | | Example 15 I−15 | Example 16 I−16 | Example 17 I−17 | Example 18 I−18 | Example 19 I−19 | Example 20 I−20 | Example 21 I−21 |
|---|---|---|---|---|---|---|---|---|
| Pigment | Lionol Blue 7330 | 18 | 18 | 18 | 18 | 18 | 18 | 18 |
| Gel varnish | GV15 | 64 | | | | | | |
| | GV16 | | 64 | | | | | |
| | GV17 | | | 62 | | | | |
| | GV18 | | | | 59 | | | |
| | GV19 | | | | | 58 | | |
| | GV20 | | | | | | 59 | |
| | GV21 | | | | | | | 60 |
| Hydrocarbon solvent | AF5 | 18 | 18 | 18 | 20 | 18 | 18 | 20 |
| | AF7 | | | 2 | 3 | 6 | 4 | 1 |
| Drying accelerator | Manganese naphthenate | 0.5 | 1 | 1 | 0.5 | 1 | 1 | 1 |
| | Cobalt naphthenate | 0.5 | | | 0.5 | | | |
| Ink properties | Tack | 9.5 | 9.4 | 9.5 | 9.7 | 9.1 | 9.4 | 9.6 |
| | Flow | 18.8 | 18.9 | 18.2 | 18.1 | 18 | 18.3 | 18.3 |
| | Viscosity (Pa·s/25°C) | 91 | 90 | 95 | 97 | 99 | 97 | 93 |
| | Misting | 3 | 3 | 4 | 4 | 5 | 5 | 4 |
| Emulsificated ink properties | Emulsification rate (%) | 24 | 23 | 20 | 18 | 17 | 21 | 19 |
| | Flow | 18.7 | 18.6 | 18.1 | 17.9 | 17.7 | 18.1 | 18.1 |
| | Viscosity (Pa·s/25°C) | 92 | 93 | 98 | 99 | 102 | 98 | 95 |
| Printing test | Gloss value | 75 | 74 | 72 | 70 | 70 | 71 | 72 |
| | Set (min.) | 22 | 20 | 18 | 16 | 14 | 10 | 15 |
| | Drying on a paper (hour) | 5.5 | 5 | 5 | 4.5 | 3.5 | 3.5 | 4 |

Table 24

| Composition | | Example 22 1−22 | Example 23 1−23 | Example 24 1−24 |
|---|---|---|---|---|
| Pigment | Lionol Blue 7330 | 18 | 18 | 18 |
| Gel varnish | GV22 | 62 | | |
| | GV23 | | 63 | |
| | GV24 | | | 60 |
| Hydrocarbon solvent | AF5 | 10 | 9 | 10 |
| | AF7 | 10 | 10 | 8 |
| | AF8 | | | 4 |
| Drying accelerator | Manganese naphthenate | 0.5 | 1 | 1 |
| | Cobalt naphthenate | 0.5 | | |
| Ink properties | Tack | 9.6 | 9.4 | 9.2 |
| | Flow | 18.5 | 18.3 | 18.2 |
| | Viscosity (Pa·s/25°C) | 95 | 96 | 93 |
| | Misting | 4 | 4 | 4 |
| Emulsificated ink properties | Emulsification rate (%) | 20 | 20 | 20 |
| | Flow | 18.3 | 18.1 | 18 |
| | Viscosity (Pa·s/25°C) | 96 | 99 | 95 |
| Printing test | Gloss value | 73 | 72 | 71 |
| | Set (min.) | 22 | 20 | 18 |
| | Drying on a paper (hour) | 5 | 5 | 3.5 |

Table 25

| Composition | | Example 25 I−25 | Example 26 I−26 | Example 27 I−27 | Example 28 I−28 |
|---|---|---|---|---|---|
| Pigment | Lionol Blue 7330 | 18 | 18 | 18 | 18 |
| Gel varnish | GV25 | 61 | | | |
| | GV26 | | 63 | | |
| | GV27 | | | 60 | |
| | GV28 | | | | 60 |
| Hydrocarbon solvent | AF5 | 11 | 10 | 15 | 15 |
| | AF7 | 10 | 9 | 5 | 5 |
| | AF8 | | | 2 | 2 |
| Drying accelerator | Manganese naphthenate | 0.5 | 1 | 1 | 1 |
| | Cobalt naphthenate | 0.5 | | | |
| Ink properties | Tack | 9.3 | 9.3 | 9.2 | 9.3 |
| | Flow | 18.3 | 18.5 | 18.2 | 18.1 |
| | Viscosity (Pa·s/25°C) | 94 | 92 | 94 | 95 |
| | Misting | 4 | 3 | 4 | 5 |
| Emulsificated ink properties | Emulsification rate (%) | 24 | 26 | 22 | 22 |
| | Flow | 18 | 18.1 | 18 | 18 |
| | Viscosity (Pa·s/25°C) | 99 | 96 | 96 | 98 |
| Printing test | Gloss value | 74 | 75 | 72 | 71 |
| | Set (min.) | 25 | 27 | 16 | 14 |
| | Drying on a paper (hour) | 6 | 6 | 3.5 | 3 |

Table 26

| Composition | | Example 29 I—29 | Example 30 I—30 | Example 31 I—31 | Example 32 I—32 |
|---|---|---|---|---|---|
| Pigment | Lionol Blue 7330 | 18 | 18 | 18 | 18 |
| Gel varnish | GV29 | 63 | | | |
| | GV30 | | 64 | | |
| | GV31 | | | 62 | |
| | GV32 | | | | 60 |
| Hydrocarbon solvent | AF5 | 9 | 8 | 15 | 15 |
| | AF6 | 10 | 10 | 5 | 5 |
| | AF7 | | | | 2 |
| Drying accelerator | Manganese naphthenate | 0.5 | 1 | 1 | 0.7 |
| | Cobalt naphthenate | 0.5 | | | 0.3 |
| Ink properties | Tack | 9.3 | 9.3 | 9.4 | 9.4 |
| | Flow | 18.4 | 18.6 | 18.2 | 18.1 |
| | Viscosity (Pa·s/25°C) | 94 | 91 | 94 | 96 |
| | Misting | 4 | 3 | 4 | 5 |
| Emulsificated ink properties | Emulsification rate (%) | 23 | 26 | 21 | 20 |
| | Flow | 18 | 18.3 | 18 | 17.8 |
| | Viscosity (Pa·s/25°C) | 98 | 95 | 96 | 98 |
| Printing test | Gloss value | 74 | 75 | 73 | 72 |
| | Set (min.) | 24 | 26 | 16 | 14 |
| | Drying on a paper (hour) | 6 | 6.5 | 3.5 | 3.5 |

Table 27

| Composition | | Example 33 I−33 | Example 34 I−34 | Example 35 I−35 |
|---|---|---|---|---|
| Pigment | Lionol Blue 7330 | 18 | 18 | 18 |
| Gel varnish | GV33 | 64 | | |
| | GV34 | | 64 | |
| | GV35 | | | 61 |
| Hydrocarbon solvent | AF5 | 8 | 4 | 16 |
| | AF6 | 10 | 14 | |
| | AF7 | | | 5 |
| Drying accelerator | Manganese naphthenate | 1 | 1 | 0.7 |
| | Cobalt naphthenate | | | 0.3 |
| Ink properties | Tack | 9.3 | 9.4 | 9.2 |
| | Flow | 18.7 | 18.8 | 18.3 |
| | Viscosity (Pa·s/25°C) | 91 | 90 | 93 |
| | Misting | 3 | 3 | 4 |
| Emulsificated ink properties | Emulsification rate (%) | 21 | 21 | 20 |
| | Flow | 18.5 | 18.6 | 18 |
| | Viscosity (Pa·s/25°C) | 93 | 93 | 95 |
| Printing test | Gloss value | 74 | 74 | 72 |
| | Set (min.) | 22 | 20 | 18 |
| | Drying on a paper (hour) | 5 | 5 | 4 |

Table 28

| Composition | | Example 36 I−36 | Example 37 I−37 | Example 38 I−38 | Example 39 I−39 | Example 40 I−40 | Example 41 I−41 | Example 42 I−42 |
|---|---|---|---|---|---|---|---|---|
| Pigment | Lionol Blue 7330 | 18 | 18 | 18 | 18 | 18 | 18 | 18 |
| Gel varnish | GV36 | 62 | | | | | | |
| | GV37 | | 60 | | | | | |
| | GV38 | | | 60 | | | | |
| | GV39 | | | | 60 | | | |
| | GV40 | | | | | 58 | | |
| | GV41 | | | | | | 60 | |
| | GV42 | | | | | | | 60 |
| Hydrocarbon solvent | AF5 | 20 | 18 | 20 | 10 | 14 | 12 | 12 |
| | AF6 | | | | 10 | | 10 | |
| | AF7 | | 4 | 2 | 2 | 10 | | 10 |
| Drying accelerator | Manganese naphthenate | 1 | 1 | 0.5 | 1 | 1 | 1 | 0.5 |
| | Cobalt naphthenate | | | 0.5 | | | | 0.5 |
| Ink properties | Tack | 9.4 | 9.5 | 9.3 | 9.5 | 9.3 | 9.4 | 9.2 |
| | Flow | 18.5 | 18.1 | 18.2 | 18.2 | 18 | 18.3 | 18.1 |
| | Viscosity (Pa·s/25℃) | 95 | 97 | 96 | 96 | 98 | 95 | 93 |
| | Misting | 4 | 5 | 5 | 4 | 5 | 4 | 4 |
| Emulsificated ink properties | Emulsification rate (%) | 19 | 20 | 19 | 20 | 19 | 20 | 20 |
| | Flow | 18.2 | 17.8 | 18 | 18 | 17.7 | 18 | 17.9 |
| | Viscosity (Pa·s/25℃) | 96 | 98 | 97 | 98 | 100 | 97 | 95 |
| Printing test | Gloss value | 73 | 71 | 71 | 72 | 70 | 72 | 71 |
| | Set (min.) | 23 | 18 | 18 | 20 | 15 | 20 | 17 |
| | Drying on a paper (hour) | 4.5 | 4 | 3.5 | 4.5 | 3.5 | 4 | 4 |

Table 29

| Composition | | Example 43 I-43 | Example 44 I-44 | Example 45 I-45 | Example 46 I-46 | Example 47 I-47 | Example 48 I-48 | Example 49 I-49 | Example 50 I-50 | Example 51 I-51 |
|---|---|---|---|---|---|---|---|---|---|---|
| Pigment | Lionol Blue 7330 | 18 | 18 | 18 | 18 | 18 | 18 | 18 | 18 | 18 |
| Gel varnish | GV43 | 62 | | | | | | | | |
| | GV44 | | 64 | | | | | | | |
| | GV45 | | | 64 | | | | | | |
| | GV46 | | | | 65 | | | | | |
| | GV47 | | | | | 62 | | | | |
| | GV48 | | | | | | 60 | | | |
| | GV49 | | | | | | | 60 | | |
| | GV50 | | | | | | | | 60 | |
| | GV51 | | | | | | | | | 60 |
| Hydrocarbon solvent | AF5 | 5 | 1 | | | | 10 | | 10 | 20 |
| | AF6 | 15 | 17 | 18 | 17 | 20 | 10 | 20 | 10 | |
| | AF7 | | | | | | 2 | 2 | 2 | 2 |
| Drying accelerator | Manganese naphthenate | 0.5 | 1 | 1 | 0.5 | 1 | 0.5 | 1 | 1 | 1 |
| | Cobalt naphthenate | 0.5 | | | 0.5 | | 0.5 | | | |
| Ink properties | Tack | 9.5 | 9.4 | 9.3 | 9.3 | 9.1 | 9.7 | 9.2 | 9.4 | 9.8 |
| | Flow | 18.7 | 18.7 | 18.8 | 18.6 | 18.4 | 18.3 | 18.3 | 18.5 | 18.2 |
| | Viscosity (Pa·s/25°C) | 92 | 91 | 92 | 95 | 92 | 93 | 96 | 94 | 95 |
| | Misting | 4 | 3 | 3 | 3 | 3 | 4 | 4 | 4 | 4 |
| Emulsificated ink properties | Emulsification rate (%) | 22 | 24 | 24 | 25 | 25 | 21 | 22 | 20 | 20 |
| | Flow | 18.6 | 18.6 | 18.5 | 18.3 | 18.3 | 18 | 18.2 | 18.1 | 18 |
| | Viscosity (Pa·s/25°C) | 93 | 93 | 95 | 99 | 95 | 95 | 98 | 98 | 98 |
| Printing test | Gloss value | 74 | 75 | 75 | 75 | 74 | 72 | 71 | 70 | 71 |
| | Set (min.) | 25 | 25 | 25 | 25 | 25 | 18 | 18 | 15 | 13 |
| | Drying on a paper (hour) | 5.5 | 6 | 6 | 6 | 5 | 4.5 | 4.5 | 4 | 3.5 |

Table 30

| Composition | | Example 52 I-52 | Example 53 I-53 | Example 54 I-54 | Example 55 I-55 | Example 56 I-56 | Example 57 I-57 | Example 58 I-58 | Example 59 I-59 |
|---|---|---|---|---|---|---|---|---|---|
| Pigment | Lionol Blue 7330 | 18 | 18 | 18 | 18 | 18 | 18 | 18 | 18 |
| Gel varnish | GV52 | 58 | | | | | | | |
| | GV53 | | 59 | | | | | | |
| | GV54 | | | 60 | | | | | |
| | GV55 | | | | 59 | | | | |
| | GV56 | | | | | 60 | | | |
| | GV57 | | | | | | 58 | | |
| | GV58 | | | | | | | 60 | |
| | GV59 | | | | | | | | 58 |
| Hydrocarbon solvent | AF5 | 14 | 13 | 20 | 13 | 10 | 7 | 10 | 9 |
| | AF7 | 5 | 5 | | 10 | 12 | 12 | 12 | 10 |
| | AF8 | 5 | 5 | 2 | | | 5 | | 5 |
| Drying accelerator | Manganese naphthenate | 1 | 1 | 0.5 | 0.2 | 1 | 1 | 1 | 0.7 |
| | Cobalt naphthenate | | | 0.5 | 0.8 | | | | 0.3 |
| Ink properties | Tack | 9.1 | 9.1 | 9.5 | 9.3 | 9.6 | 9.4 | 9.3 | 9.7 |
| | Flow | 18 | 18.1 | 18.3 | 18.1 | 18.6 | 18.2 | 18.3 | 18 |
| | Viscosity (Pa·s/25°C) | 98 | 96 | 94 | 97 | 96 | 94 | 96 | 98 |
| | Misting | 5 | 5 | 4 | 5 | 4 | 5 | 4 | 5 |
| Emulsificated ink properties | Emulsification rate (%) | 18 | 18 | 20 | 18 | 18 | 19 | 20 | 20 |
| | Flow | 17.8 | 18 | 18.1 | 18.2 | 18.3 | 18 | 18.1 | 17.8 |
| | Viscosity (Pa·s/25°C) | 100 | 98 | 96 | 99 | 99 | 96 | 97 | 100 |
| Printing test | Gloss value | 70 | 71 | 72 | 72 | 72 | 71 | 72 | 71 |
| | Set (min.) | 13 | 13 | 15 | 18 | 20 | 15 | 15 | 12 |
| | Drying on a paper (hour) | 3 | 3 | 3.5 | 4 | 4 | 3.5 | 3.5 | 3 |

Table 31

| Composition | | Example 60 1−60 | Example 61 1−61 | Example 62 1−62 | Example 63 1−63 | Example 64 1−64 | Example 65 1−65 | Example 66 1−66 |
|---|---|---|---|---|---|---|---|---|
| Pigment | Lionol Blue 7330 | 18 | 18 | 18 | 18 | 18 | 18 | 18 |
| Gel varnish | GV60 | 60 | | | | | | |
| | GV61 | | 60 | | | | | |
| | GV62 | | | 60 | | | | |
| | GV63 | | | | 60 | | | |
| | GV64 | | | | | 61 | | |
| | GV65 | | | | | | 60 | |
| | GV66 | | | | | | | 60 |
| Hydrocarbon solvent | AF5 | 22 | 20 | 18 | 20 | 20 | 18 | 18 |
| | AF6 | | 2 | | | | | |
| | AF7 | | | 4 | 2 | 1 | 4 | 4 |
| Drying accelerator | Manganese naphthenate | 1 | 1 | 1 | 1 | 1 | 1 | 1 |
| Ink properties | Tack | 9.4 | 9.5 | 9.2 | 9.4 | 9.7 | 9.3 | 9.5 |
| | Flow | 18.4 | 18.5 | 18.3 | 18.5 | 18.5 | 18.3 | 18.1 |
| | Viscosity (Pa·s/25°C) | 95 | 94 | 93 | 94 | 95 | 94 | 96 |
| | Misting | 4 | 4 | 4 | 4 | 3 | 4 | 5 |
| Emulsificated ink properties | Emulsification rate (%) | 20 | 20 | 20 | 22 | 22 | 22 | 22 |
| | Flow | 18.2 | 18.3 | 18 | 18.2 | 18.3 | 18 | 17.8 |
| | Viscosity (Pa·s/25°C) | 97 | 96 | 95 | 96 | 97 | 96 | 99 |
| Printing test | Gloss value | 72 | 72 | 72 | 74 | 74 | 73 | 72 |
| | Set (min.) | 18 | 16 | 18 | 20 | 22 | 18 | 16 |
| | Drying on a paper (hour) | 4 | 4 | 4 | 5 | 5.5 | 4 | 3.5 |

Table 32

| Composition | | Example 67 I−67 | Example 68 I−68 | Example 69 I−69 | Example 70 I−70 | Example 71 I−71 | Example 72 I−72 | Example 73 I−73 |
|---|---|---|---|---|---|---|---|---|
| Pigment | Lionol Blue 7330 | 18 | 18 | 18 | 18 | 18 | 18 | 18 |
| Gel varnish | GV67 | 62 | | | | | | |
| | GV68 | | 63 | | | | | |
| | GV69 | | | 61 | | | | |
| | GV70 | | | | 62 | | | |
| | GV71 | | | | | 64 | | |
| | GV72 | | | | | | 61 | |
| | GV73 | | | | | | | 60 |
| Hydrocarbon solvent | AF5 | 10 | 9 | 15 | 5 | | 10 | 17 |
| | AF6 | 10 | 10 | 6 | 15 | 18 | 6 | |
| | AF7 | | | | | | 5 | 5 |
| Drying accelerator | Manganese naphthenate | 1 | 1 | 1 | 1 | 1 | 1 | 1 |
| Ink properties | Tack | 9.5 | 9.3 | 9.2 | 9.6 | 9.7 | 9.2 | 9.5 |
| | Flow | 18.5 | 18.7 | 18.4 | 18.7 | 18.8 | 18.4 | 18.3 |
| | Viscosity (Pa·s/25°C) | 94 | 92 | 95 | 91 | 91 | 92 | 96 |
| | Misting | 4 | 3 | 4 | 3 | 3 | 4 | 4 |
| Emulsificated ink properties | Emulsification rate (%) | 21 | 22 | 21 | 25 | 25 | 20 | 20 |
| | Flow | 18.3 | 18.4 | 18.2 | 18.2 | 18.2 | 18.2 | 18 |
| | Viscosity (Pa·s/25°C) | 96 | 96 | 97 | 95 | 95 | 94 | 98 |
| Printing test | Gloss value | 72 | 74 | 73 | 74 | 75 | 72 | 72 |
| | Set (min.) | 17 | 20 | 20 | 24 | 25 | 16 | 15 |
| | Drying on a paper (hour) | 4 | 6 | 5 | 6 | 6 | 3.5 | 3.5 |

D: Method of evaluating ink

Tack value: an ink of a predetermined amount was used to test with an inkometer manufactured by Toyoseiki (K.K.) at 400 rpm under the conditions of an ambient temperature of 25ºC and a roll temperature of 30ºC to obtain a

tack value after 1 minute.

Flow value: A value (millimeter) of a diameter of flown ink after 1 minute at an ambient temperature of 25ºC was measured with a spreadmeter to obtain a flow value.

Misting: An ink flown from a roll in the form of a mist was captured on a paper with a misting test machine at 2000 rpm for 2 minutes under the conditions of a roll temperature of 40ºC to obtain a relative value.

5 (excellent) to 1 (inferior)

Emulsification rate: Excess purified water was placed in an ink and enforced to emulsify with a high speed mixer and, thereafter, excess water was enforced to remove from the emulsified ink on a glass plate with a knife spatula to obtain the water content in the emulsified ink with a Karl Fischer water content measuring apparatus.

E: Method of printing test

Gloss: 0.15 ml of an ink was transfer-printed on an art paper with an overall roll using a R1 tester (manufactured by Akaraseisakusho (K.K.)) and, thereafter, a gloss value after 24 hours was measured at 60 ° - 60° with a glossmeter (manufactured by Murakami Shikisai Gijutsu Kenkyusho (K.K.)). Set: 0.15 ml of an ink was transfer-printed on an art paper with a 4 cut roll using a R1 tester (manufactured by Akaraseisakusho) and, thereafter, the transfer-printed paper was cut and applied an another art paper and a time (minute) until an ink is not adhered to an art paper was obtained using a roll of a R1 tester.

Drying on paper: 0.2 ml of an ink was transfer-printed on a parchment paper with a R1 tester 4 control and, thereafter, a parchment paper was overlaid thereon, which was set at Choyokai-type drying tester and a drying time in the interior of the ink was compared under the conditions of a rotation number of 0.1 rpm and an ambient temperature of 25ºC.

Then, the effects of the present invention are explained by means of Comparative Examples.

Comparative Example-1 (Alkyd resin: AKD-1)

73.1 parts of rosin was placed in a four-neck flask equipped with a stirrer, a water separating tube and a thermometer, heated to melt at 240ºC under a nitrogen stream, then 14.2 parts of pentaerythritol was placed therein and reacted at 270ºC to below an acid value of 20. Thereafter, 14.2 parts of isophthalic acid was placed therein gradually at the same temperature, and reacted to below an acid value of 20 to obtain an alkyd resin (AKD-1). The solubility of this resin was not lower than 176ºC at a clouding temperature in all the cases of AF5, AF6 and AF7 and the alkyd resin was not possible to make into a varnish or an ink with a hydrocarbon solvent in the present invention.

Comparative Example-2 (Alkyd resin: AKD-2)

76.3 parts of a linseed fatty acid (Amanil) was heated to 240ºC under a nitrogen stream in a four-neck flask equipped with a stirrer, a water separating tube and a thermometer, 6 parts of pentaerythritol and 8.3 parts of glycerin were placed therein and reacted to below an acid value of 20. Thereafter, 6 parts of isophthalic acid and 12.5 parts of phthalic anhydride were placed therein gradually and reacted to below an acid value of 20 to obtain a liquid alkyd resin (AKD-2). The solubility of this resin was 83ºC at AF6 and 45ºC at AF5 . In addition, Mw was 22000.

Comparative Example-3 (Rosin-modified phenol resin: RP-1)

665 parts of p-octylphenol, 654 parts of 37% formalin and 490 parts of xylene were placed in a flask equipped with a stirrer, a refluxing condenser and a thermometer, heated to stir while blowing a nitrogen stream, 7 parts of calcium dispersed into 35 parts of water was added at 50ºC, and then heated to 95ºC and reacted at the same temperature for 4 hours. Thereafter, the reaction was cooled, neutralized with sulfuric acid, washed with water and allowed to stand. Then, a separated resol-xylene solution was filtered using a GAF filter (filtration size: 10 µm). On the other hand, the washing solution after separation is treated industrially with the activated sludge treatment or the burning treatment facilities. The content of resol in the resulting resol-xylene solution (P-1) was found to be 55% by a hot air drying at 150ºC for 30 minutes.

Then, 60 parts of rosin was placed in a four-neck flask equipped with a stirrer, a refluxing condenser with a water separating apparatus and a thermometer while blowing a nitrogen stream, the rosin was heated to melt and, when a temperature became 200ºC, 73 parts (solid: 40 parts) of the aforementioned resol-xylene solution (P-1) was placed over 2 hours while adding dropwise and, after placing was complete, a temperature was raised immediately, 6.0 parts of glycerin was placed therein at 250ºC to react for 12 hours, the reaction was stopped at an acid value of 25 to obtain a rosin-modified phenol resin (RP-1). In this reaction, since formaldehyde was discharged as a gas, industrially, the off-gas is collected and scrubber-treated and, thereafter, is treated by the activated sludge treatment or burning treatment facilities. The solubility of this resin was 105ºC at AF Solvent No. 5, 135ºC at AF Solvent No. 6 and

90ºC at AF Solvent No. 7 at a clouding temperature, Mw was 28000 and a melting point was 145ºC.

Comparative Example-4 (Rosin-modified phenol resin: RP-2)

According to the same manner as that of Comparative Example 2 except that glycerin was replaced with 3.3 parts of pentaerythritol and 0.15 part of p-toluenesulfonic acid was used as a catalyst, a rosin-modified phenol resin (RP-2) was obtained. The solubility of this resin was not higher than 36ºC at all the cases of AF Solvent No. 5, No. 6 and No. 7, Mw was 42000 and a melting point was 151ºC.

Comparative Example 5 (Ester-modified hydrocarbon resin: R-74)

According to the same manner as that in Example 8 except that the dihydric alcohol BEPG was not used and 50 parts of the monohydric alcohol D13 was used to react, an ester-modified hydrocarbon resin (R-74) having an acid value of 20, a clouding temperature of not higher than 36ºC at AF7, a melting point of 80ºC and Mw of 8000 was obtained.

In the resins obtained in Comparative Examples 2 to 5, a varnish and a gel varnish were made and an ink was made and the ink properties and printing evaluations were performed. The results are summarized in Table 33 and Table 34.

Table 33

| Composition | | Comparative Example 2 GV74 | Comparative Example 3 GV75 | Comparative Example 4 GV76 | Comparative Example 5 GV77 |
|---|---|---|---|---|---|
| Resin | AKD-2 | 60 | | | |
| | RP-1 | | 38 | | |
| | RP-2 | | | 40 | |
| | R-74 | | | | 50 |
| Hydrocarbon solvent | AF5 | | 20 | 20 | |
| | AF6 | 20 | | | 30 |
| | AF7 | | 22 | | |
| Drying oil | Linseed oil | 20 | 20 | 20 | 20 |
| Gelling agent | ALCH | 3 | 0.6 | 0.8 | 1.5 |
| Viscosity | Pa·s /25°C | 90 | 98 | 91 | 90 |

Table 34

| Composition | | Comparative Example 2 1-74 | Comparative Example 3 1-75 | Comparative Example 4 1-76 | Comparative Example 5 1-77 |
|---|---|---|---|---|---|
| Pigment | Lionol Blue 7330 | 18 | 18 | 18 | 18 |
| Gel varnish | GV74 | 65 | | | |
| | GV75 | | 58 | | |
| | GV76 | | | 60 | |
| | GV77 | | | | 65 |
| Hydrocarbon solvent | AF5 | | 20 | 20 | |
| | AF6 | 17 | | 2 | 17 |
| | AF7 | | 4 | | |
| Drying accelerator | Manganese naphthenate | 1 | 1 | 1 | 1 |
| Ink properties | Tack | 9.1 | 9.8 | 9.6 | 9.1 |
| | Flow | 20 | 17.5 | 18.3 | 21 |
| | Viscosity (Pa·s/25°C) | 86 | 99 | 70 | 65 |
| | Misting | 1 | 5 | 3 | 1 |
| Emulsificated ink properties | Emulsification rate (%) | 60 | 50 | 25 | 40 |
| | Flow | 17 | 16.5 | 18 | 18 |
| | Viscosity (Pa·s/25°C) | 95 | 110 | 73 | 84 |
| Printing test | Gloss value | 78 | 63 | 75 | 74 |
| | Set (min.) | 45 | 13 | 18 | 28 |
| | Drying on a paper (hour) | 10 | 2.5 | 4 | 6.5 |

Comparative Example 4 exemplifies a printing ink made using the representative rosin-modified phenol resin corresponding to AF Solvent. It is seen that the hydrocarbon resin in the present invention has the similar performance. In addition, Comparative Example 2 (AKD-2) and Comparative Example 5 (R-74) have the better solubility in the AF solvent but since a melting point is lower, they are inferior in the drying properties and, since the elastic properties of a resin are lacked, they are remarkably inferior in the misting.

Industrial Applicability

An hydrocarbon resin which is ester-modified with a long chain apliphtic alkylalcohol relating to the present invention is excellent in the solubility in a hydrocarbon solvent comprising a naphthene hydrocarbon and/or a paraffin hydroarbon, so-called aromaless (free) hydrocarbon solvent which has a boiling point of not lower than 200ºC and an aromatic component of not greater than 3% by weight, since it is a solid resin having a melting point of not lower than 100ºC, it can provide the excellent properties in the suitable emulsification property, the misting property, set and the drying property as a printing ink which is prepared using the hydrocarbon solvent. In addition, since a phenol resin is not used as a component, formaldehydes are which are said to necessary for preparing the resin are not used and, thus, preservation of the labor hygiene environment and the reduction in the cost for treating a formaldehyde containing solution can be attained.

## Claims

1. A resin for a printing ink which comprises an ester-modified hydrocarbon resin, which is ester-modified with a long chain aliphatic alcohol, having a melting point of not lower than 100ºC, wherein the ester-modified hydrocarbon resin has not higher than 100ºC at a clouding temperature as the solubility in a hydrocarbon solvent having an aromatic component of not greater than 3% by weight, comprising a naphthene hydrocarbon and/or a paraffin hydrocarbon and having a boiling point of not lower than 200ºC.

2. The resin for a printing ink according to claim 1, wherein the ester-modified hydrocarbon resin is obtained by an esterification reaction of an acid-modified hydrocarbon resin (A) which is obtained by modifying a hydrocarbon resin containing as a component a five-membered compound represented by the following general formula (1):

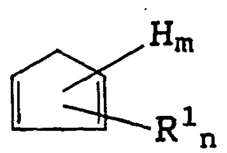

(1)

wherein H represents hydrogen atom, $R^1n$ represents an alkyl group of a carbon number of 1 to 3, and m and n are an integer of 0 to 6, provided that m+n is 6, with an α, β-ethylenically unsaturated carboxylic acid or an anhydride thereof,

a dihydric alcohol (B) represented by the following general formula (2):

$$HO-R^2-OH \qquad (2)$$

wherein $R^2$ represents an alkylene group having a carbon number of 6 to 20, and/or

a trihydric alcohol represented by the following general formula (3):

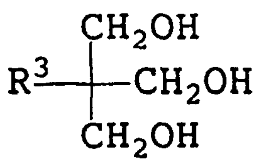

(3)

wherein $R^3$ represents an alkyl group or an alkenyl group having a carbon number of 3 to 25.

3. A process for producing the resin for a printing ink according to claim 2, which comprises reacting the acid-modified hydrocarbon resin (A), the dihydric alcohol (B), the trihydric alcohol (C) so that the following relationship is satisfied:

$$(b+c)/a = 0.01 \text{ to } 1$$

wherein

'a' denotes a molar number corresponding to carboxyl group of an α, β-ethylenically unsaturated carboxylic acid or an anhydride thereof contained in the acid-modified hydrocarbon resin (A),
'b' denotes amolar number of hydroxy group of the dihydric alcohol (B), and
'c' denotes a molar number of hydroxy group of the trihydric alcohol (C).

4. The resin for a printing ink according to claim 2, which is obtained by esterification reaction by further using a substituted succinic acid or an anhydride thereof(D) represented by the general formula (4):

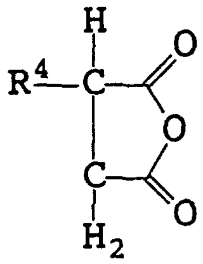

or

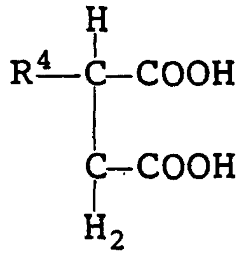

(4)

wherein $R^4$ represents an alkyl group or an alkenyl group having a carbon number of 4 to 30.

**5.** A process for producing the resin for a printing ink according to claim 4, which comprises reacting the acid-modified hydrocarbon resin (A), the dihydric alcohol (B), the trihydric alcohol (C) and the substituted succinic acid or an anhydride thereof (D) so that the following relationship is satisfied:

$$(b+c)/(d+a) = 0.01 \text{ to } 1$$

wherein

'a' denotes a molar number corresponding to carboxyl group of an α, β-ethylenically unsaturated carboxylic acid or an anhydride thereof contained in the acid-modified hydrocarbon resin (A),
'b' denotes a molar number of hydroxy group of the dihydric alcohol (B),
'c' denotes a molar number of hydroxy group. of the trihydric alcohol (C), and
'd' denotes a molar number corresponding to carboxyl group contained in the substituted succinic acid or an anhydride thereof (D).

**6.** The resin for a printing ink according to claim 2 or 4, which is obtained by an esterification reaction by further using at least one selected from a group consisting of a monohydric alcohol (E) represented by the general formula (5):

$$R^5\text{—OH} \qquad (5)$$

wherein $R^5$ represents an alkyl group having a carbon number of 6 to 20 and having a saturated or an unsaturated double bond in the molucule, a saturated or an unsaturated fatty acid (F) and a resin acid (G).

**7.** A process for producing the resin for a printing ink according to claim 6, which comprises reacting the acid-modified hydrocarbon resin (A), the dihydric alcohol (B), the trihydric alcohol (C), the substituted succinic acid or an anhydride thereof (D), the monohydric alcohol (E), the saturated or unsaturated fatty acid (F) and the resin acid (G) so that the following relationship is satisfied:

$$(b+c+e)/(a+d+f+g) = 0.01 \text{ to } 1$$

wherein

'a' denotes a molar number corresponding to carboxyl group of an α, β -ethylenically unsaturated carboxylic acid or an anhydride thereof contained in the acid-modified hydrocarbon resin (A),
'b' denotes a molar number of hydroxy group of the dihydric alcohol (B),
'c' denotes a molar number of hydroxy group of the trihydric alcohol (C),
'd' denotes a molar number corresponding to carboxyl group contained in the substituted succinic acid or an anhydride thereof (D),
'e' denotes a molar number of hydroxy group of the monohydric alcohol (E),

'f' denotes a molar number corresponding to carboxyl group of the saturated or unsaturated fatty acid (F), and 'g' denotes a molar number corresponding to carboxyl group of the resin acid (G).

**8.** A printing ink which comprises the resin for a printing ink according to claim 1, 2, 4 or 6, and a hydrocarbon solvent, having a boiling point of not lower than 200ºC, comprising a naphthene hydrocarbon and/or a paraffin hydrocarbon and having the content of an aromatic component of not greater than 3% by weight.

**9.** A printed article which comprises a substrate which is printed with the printing ink according to claim 8.

## INTERNATIONAL SEARCH REPORT

International application No.
PCT/JP99/06384

A. CLASSIFICATION OF SUBJECT MATTER
Int.Cl$^7$ C08F8/14, C09D11/16

According to International Patent Classification (IPC) or to both national classification and IPC

B. FIELDS SEARCHED

Minimum documentation searched (classification system followed by classification symbols)
Int.Cl$^7$ C08F8/14, C09D11/16

Documentation searched other than minimum documentation to the extent that such documents are included in the fields searched

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| X | US, 4028119, A (Mitsui Petrochemical Industries), 07 June, 1977 (07.06.77), Claims & DE, 2504822, A & FR, 2259878, A & JP, 50-109004, A | 1,2,8,9 |
| X | US, 5324350, A (Hoechst Aktiengesellschaft), 28 June, 1994 (28.06.94), Claims & DE, 4206698, A | 1,2,8,9 |
| X | JP, 53-71191, A (Mitsui Petrochemical Ind. Ltd.), 24 June, 1978 (24.06.78), Claims (Family: none) | 1 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 February, 1999 (16.02.99) | 29 February, 2000 (29.02.00) |
| Name and mailing address of the ISA/ Japanese Patent Office | Authorized officer |
| Facsimile No. | Telephone No. |

Form PCT/ISA/210 (second sheet) (July 1992)